# EUROPEAN PATENT APPLICATION

(11) **EP 4 431 533 A1**
(43) Date of publication of application: **18.09.2024**
(21) Application number: 22892807.3
(22) Date of filing: 09.11.2022
(51) Int. Cl.: C08F 4/58, B60C 1/00, C08F 36/04, C08K 3/04, C08K 3/36, C08L 9/00

(54) **METHOD FOR PRODUCING MODIFIED CONJUGATED DIENE POLYMER, MODIFIED CONJUGATED DIENE POLYMER, POLYMER COMPOSITION, CROSSLINKED BODY AND TIRE**

(30) Priority: 10.11.2021 JP 2021183755
(71) Applicant: ENEOS Materials Corporation, Tokyo, 105-7109 (JP)
(72) Inventor: OHTA, Naoki, Tokyo 105-0021 (JP); ITOU, Ken-ichi, Tokyo 105-0021 (JP); MORITA, Hiroyuki, Tokyo 105-0021 (JP); HARAGUCHI, Makoto, Tokyo 105-8640 (JP)
(74) Representative: TBK
(86) International application number: PCT/JP2022/041686
(87) International publication number: WO 2023/085309

(57) **Abstract**

A modified conjugated diene-based polymer is produced by a method which includes a step of polymerizing a monomer containing a conjugated diene compound in the presence of a polymerization initiator which contains a silicon-containing initiator having a group F2 and an alkali metal element or an alkaline earth metal element. F2: a group "*¹-Si(R¹)ₙ(Y¹)₃₋ₙ" (wherein R¹ represents a C1 to C20 hydrocarbyl group; Y¹ represents group "-OR²" or group "-NR³R⁴"; each of R², R³, and R⁴ independently represents a C1 to C20 hydrocarbyl group; n is an integer of 0 to 2).

## Description

### Technical Field

### [Cross-Reference to Related Applications]

The present application claims the benefit of Japanese Patent Application No. 2021-183755 filed November 10, 2021, the disclosure of which is incorporated herein by reference.

The present disclosure relates to a method for producing a modified conjugated diene-based polymer, to a modified conjugated diene-based polymer, to a polymer composition, to a cross-linked product, and to a tire.

### Background Art

Conjugated diene-based polymers, which are produced through polymerization of a conjugated diene compound, exhibit excellent properties such as high heat resistance, high wear resistance, high mechanical strength, and good moldability, and find wide uses as industrial products including pneumatic tires, rubber vibration isolators, and rubber hoses.

As has already been known, polymer compositions for producing parts of pneumatic tires such as tread and sidewall employ a conjugated diene-based polymer and, additionally, reinforcing fillers such as carbon black and silica are conventionally incorporated into the polymer compositions, in order to enhance durability and wear resistance of such rubber products. Also, as has been conducted, a modified conjugated diene-based polymer produced by modifying a conjugated diene-based polymer with a silicon- or nitrogen-containing compound is used for enhancing compatibility between the conjugate diene-based polymer and a reinforcing material (see, for example, Patent Documents 1 to 3).

### Prior Art Documents

### Patent Documents

Patent Document 1: WO 2008/123164
Patent Document 2: Japanese Patent Application Laid-Open (kokai) No. 1999-349632
Patent Document 3: WO 2017/221943

### Summary of the Invention

### Problems to be Solved by the Invention

Under recent environmental conditions, increased awareness of saving of material and energy, increased consumers, needs for travelling performance, and other conditions, there is demand for a rubber for automobile tires having excellent low fuel consumption performance (i.e., low rolling resistance), the demand being more important than ever.

The present disclosure has been established so as to solve the aforementioned problems. Thus, an object of the invention is to provide a modified conjugated diene-based polymer which can yield a cross-linked product having excellent low fuel consumption performance.

### Means for Solving the Problems

According to the present disclosure, there are provided a method for producing a modified conjugated diene-based polymer, a modified conjugated diene-based polymer, a polymer composition, a cross-linked product, and a tire, which are described below.
[1] A method for producing a modified conjugated diene-based polymer, the method including a step of polymerizing a monomer including a conjugated diene compound in the presence of a polymerization initiator,
   wherein the polymerization initiator comprises a silicon-containing initiator having an alkali metal element or an alkaline earth metal element and a group F2, and
   wherein the group F2 is a group "*¹-Si(R¹)ₙ(Y¹)₃₋ₙ":
      wherein R¹ represents a C1 to C20 hydrocarbyl group; Y¹ represents group "-OR²" or group "-NR³R⁴"; each of R², R³, and R⁴ independently represents a C1 to C20 hydrocarbyl group; n is an integer of 0 to 2; when n is 0 or 1, a plurality of Y¹s are identical to or different from one another; when n is 2, a plurality of R⁴s are identical to or different from one another; and "*¹" represents a bond to a carbon atom.
[2] A modified conjugated diene-based polymer represented by formula (3). 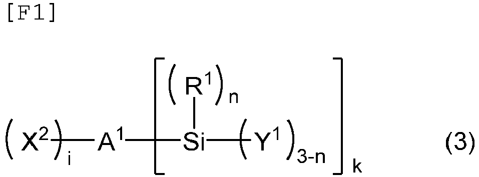 (In formula (3), X² represents a group represented by formula (4-1) or (4-2); A¹ represents a C1 to C20 (i+k)-valent hydrocarbon group or a C1 to C20 (i+k)-valent group which has at least one atom selected from the group consisting of a nitrogen atom, an oxygen atom, and a sulfur atom, and no active hydrogen and which bonds to each of group "-Si(R¹)ₙ(Y¹)₃₋ₙ" and the group represented by formula (4-2) via a carbon atom; R¹ represents a C1 to C20 hydrocarbyl group; Y¹ represents group "-OR²" or group "-NR³R⁴"; each of R², R³, and R⁴ independently represents a C1 to C20 hydrocarbyl group; n is an integer of 0 to 2; when n is 0 or 1, a plurality of groups "Y¹" are identical to or different from one another; when n is 2, a plurality of groups "R¹" are identical to or different from one another; each of i and k is independently an integer of 1 to 6, satisfying i+k≤10; when a plurality of groups "X²" are present in formula (3), the plurality of groups "X²" are identical to or different from one another; and when a plurality of groups "-Si(R¹)ₙ(Y¹)₃₋ₙ" are present, the plurality of groups "-Si(R¹)ₙ(Y¹)₃₋ₙ" are identical to or different from one another.) 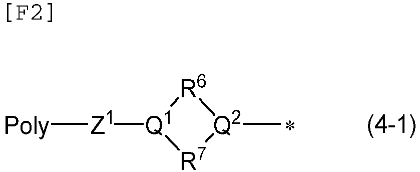 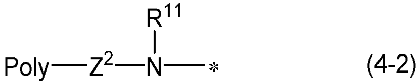 (In formula (4-1), Z¹ represents a single bond, a C1 to C8 alkanediyl group, or group "*³-Ar¹-W¹-"; Ar¹ represents a divalent aromatic ring group; W¹ represents a single bond or a methylene group; "*³" represents a bond to Q¹; each of R⁶ and R⁷ independently represents a C1 to C10 hydrocarbylene group; each of Q¹ and Q² independently represents a nitrogen atom or -CR¹⁰-; when Z¹ is a single bond, Q¹ is a nitrogen atom; R¹⁰ represents a hydrogen atom or a C1 to C20 hydrocarbyl group; Poly represents a modified or unmodified conjugated diene-based polymer chain; and "*" represents a bond.
   In formula (4-2), Z² represents a single bond, a C1 to C8 alkanediyl group, or group "*⁴-Ar¹-W¹-"; Ar¹ represents a divalent aromatic ring group; W¹ represents a single bond or a methylene group; "^{*4}" represents a bond to -NR¹¹-; R¹¹ represents a hydrogen atom, a C1 to C20 hydrocarbyl group, or a trihydrocarbylsilyl group; Poly represents a modified or unmodified conjugated diene-based polymer chain; and "*" represents a bond.)
[3] A polymer composition containing a modified conjugated diene-based polymer produced through a production method of [1] above or a modified conjugated diene-based polymer of [2] above, and at least one species selected from the group consisting of silica and carbon black.
[4] A cross-linked product formed by cross-linking of a polymer composition of [3] above.
[5] A tire having a tread and a sidewall, wherein one or both of them is formed by use of a polymer composition of [3] above.

### Advantageous Effects of the Invention

According to the modified conjugated diene-based polymer of the present disclosure, a cross-linked product having excellent low fuel consumption performance can be produced.

### Modes for Carrying Out the Invention

The modified conjugated diene-based polymer of the present disclosure can be produced through a step of polymerizing a monomer including a conjugated diene compound in the presence of a polymerization initiator (hereinafter may also be referred to as a "polymerization step"). In the polymerization step in which the modified conjugated diene-based polymer of the present disclosure is produced, a compound having an alkali metal element or an alkaline earth metal element and the below-described group F2 (hereinafter may also be referred to as a "silicon-containing initiator") is used as a polymerization initiator.

F2: group "*¹-Si(R¹)ₙ(Y¹)₃₋ₙ"(wherein R¹ represents a C1 to C20 hydrocarbyl group; Y¹ represents group "-OR²" or group "-NR³R⁴"; each of R², R³, and R⁴ independently represents a C1 to C20 hydrocarbyl group; n is an integer of 0 to 2; when n is 0 or 1, a plurality of groups "Y¹" are identical to or different from one another; when n is 2, a plurality of groups "R¹" are identical to or different from one another; and "*¹" represents a bond to a carbon atom).

Hereinafter, modes for carrying out the present disclosure will be described in detail.

### <Silicon-containing initiator>

In the production method of the present disclosure, a monomer is polymerized in the presence of a silicon-containing initiator, whereby a modified conjugated diene-based polymer into which the group F2 has been incorporated at an end of the polymer (more specifically, at a polymerization initiation end) can be yielded. By virtue of a structure derived from the silicon-containing initiator at an end of the modified conjugated diene-based polymer, the polymer can form a covalent bond or interacts with a filler such as silica or carbon black. As used herein, the term "interaction" refers to generation of intermolecular force which is weaker than a covalent bond (e.g., intermolecular electromagnetic force such as ion-dipole interaction, dipole-dipole interaction, hydrogen bond, or Van der Waals force).

### (Group F2)

The group F2 has a structure in which one or more hydrocarbyloxy groups or dihydrocarbylamino groups are bonded to a silicon atom. Examples of the C1 to C20 hydrocarbyl group of R¹, R², R³, and R⁴ include a C1 to C20 alkyl group, a C3 to C20 cycloalkyl group, a C2 to C20 alkenyl group, and a C6 to C20 aryl group. Among them, each of R¹, R², R³, and R⁴ is preferably a C1 to C20 alkyl group, more preferably a C1 to C10 alkyl group.

The silicon atom of the group F2 is bonded to a carbon atom. The carbon atom to which the silicon atom of the group F2 is bound is preferably an element forming a hydrocarbon group. Specifically, the silicon atom of the group F2 may be bonded to a chain hydrocarbon group, an alicyclic hydrocarbon group, or an aromatic hydrocarbon group.

The number "n" is preferably 1 or 2, more preferably 2, from the viewpoint of attaining both suitable productivity in polymer production and low fuel consumption performance of the cross-linked product.

From the viewpoint of achieving a higher effect of improving fuel efficiency, preferably, the silicon-containing initiator further has the below-described group F1.

F1: at least one group selected from the group consisting of a tertiary amino group and a protected secondary amino group.

Through polymerization of a monomer or monomers in the presence of a silicon-containing initiator having the group F1 and the group F2, a modified conjugated diene-based polymer into which the groups F1 and F2 have been incorporated at a polymerization initiation end can be yielded.

### (Group F1)

When the group F1 is a tertiary amino group, the hydrocarbon group bound to a nitrogen atom may be any of a chain hydrocarbon group, an alicyclic hydrocarbon group, and an aromatic hydrocarbon group. Examples of the protected secondary amino group include group "-NR²⁰-". R²⁰ is preferably a silyl-type functional group, more preferably group "-SiR²¹R²²R²³"(each of R²¹, R²², and R²³ independently represents a C1 to C20 hydrocarbyl group), particularly preferably a trihydrocarbylsilyl group.

No particular limitation is imposed on the number of the group(s) F1 and the group(s) F2 present in the silicon-containing initiator. The number of the group(s) F1 present in the silicon-containing initiator is preferably 0 to 6, more preferably 1 to 3, still more preferably 1 or 2. Also, the number of the group(s) F2(s) present in the silicon-containing initiator is preferably 1 to 6, more preferably 1 to 3, still more preferably 1 or 2. The total number of the group(s) F1 and the group(s) F2 is preferably 1 to 10, more preferably 2 to 10, still more preferably 2 to 5.

The silicon-containing initiator may be produced by, for example, mixing at least one metal compound selected from the group consisting of an alkali metal compound and an alkaline earth metal compound with a compound having the group F2 (hereinafter may also be referred to as a "compound [M]"). Alternatively, the silicon-containing initiator may be produced by mixing a metal (e.g., metallic lithium, metallic sodium, or metallic potassium) with the compound [M]. Of these, a compound produced by mixing the metal compound with the compound [M] is preferably used as the silicon-containing initiator.

### (Metal compound)

The metal compound in the present disclosure refers to a compound containing an alkali metal element or an alkaline earth metal element but containing no nitrogen. A compound in which an alkali metal element or an alkaline earth metal is bound to a hydrocarbon group is preferably used as the metal compound. Examples of such a metal compound include, alkali metal compounds such as methyllithium, ethyllithium, n-propyllithium, n-butyllithium, sec-butyllithium, t-butyllithium, 1,4-dilithiobutane, phenyllithium, stilbenelithium, naphthyllithium, 1,3-bis(1-lithio-1,3-dimethylpentyl)benzene, 1,3-phenylenebis(3-methyl-1-phenylpentylidene)dilithium, naphthylsodium, and naphthylpotassium.

Examples the alkaline earth metal include alkylarylmagnesiums such as dimethylmagnesium, diethylmagnesium, di(n-propyl)magnesium, di(n-butyl)magnesium, di(sec-butyl)magnesium, di(t-butyl)magnesium, diphenylmagnesium, bis(stilbene)magnesium, dinaphthylmagnesium, and methylphenylmagnesium.

Among them, the metal compound for use in producing the silicon-containing initiator is preferably a lithium compound, more preferably at least one species selected from the group consisting of alkyllithium and aryllithium, particularly preferably an alkyllithium (e.g., methyllithium, ethyllithium, n-propyllithium, n-butyllithium, sec-butyllithium, or t-butyllithium). These metal compounds may be used singly or in combination of two or more species.

### (Compound [M])

The compound [M] serves as an initiation modifier which modifies an initiation end of a conjugated diene-based polymer. Preferably, the compound [M] has both the group F1 and the group F2. Also preferably, in addition to the group F2 or in addition to the group F1 and the group F2, the compound [M] further contains at least one group selected from the group consisting of a monovalent cyclic group having a structure in which a halogen atom or a methyl group is bound to an aromatic ring, a secondary amino group, and a haloalkyl group (hereinafter may also be referred to as a "group F3"). By virtue of the group F3 present in the compound [M], a hydrogen atom of the methyl group bound to the aromatic ring, active hydrogen in the secondary amino group, or a halogen atom present in the aromatic ring to which the halogen atom is bound or in the haloalkyl group serves as a reaction site to the metal compound. As a result, the hydrogen atom or the halogen atom is substituted by a metal element, to thereby efficiently form the silicon-containing initiator. The secondary amino group serving as the group F3 preferably forms a ring skeleton of the nitrogen-containing aliphatic heterocycle, from the viewpoint of highly efficient formation of the silica-containing initiator.

As used herein, the term "active hydrogen" refers to a hydrogen atom bound to an atom other than a carbon atom, and preferably having a bonding energy lower than that of a C-H bond of polymethylene.

So long as the compound [M] has the group F2, no particular limitation is imposed on the structure of the remaining part. Specifically, compounds represented by the following formula (1) are preferably used as the compound [M] . 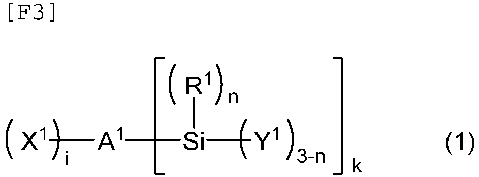 (In formula (1), X¹ represents a group represented by the below-mentioned formula (2-1) or (2-2); A¹ represents a C1 to C20 (i+k)-valent hydrocarbon group or a C1 to C20 (i+k)-valent group which contains at least one atom selected from the group consisting of a nitrogen atom, an oxygen atom, and a sulfur atom, and no active hydrogen and which bonds to each of group " -Si(R¹)ₙ(Y¹)₃₋ₙ" and the group represented by formula (2-2) via a carbon atom; R¹ represents a C1 to C20 hydrocarbyl group; Y¹ represents group "-OR²" or group "-NR³R⁴"; each of R², R³, and R⁴ independently represents a C1 to C20 hydrocarbyl group; n is an integer of 0 to 2; when n is 0 or 1, a plurality of groups "Y¹" are identical to or different from one another; when n is 2, a plurality of groups "R¹" are identical to or different from one another; each of i and k is independently an integer of 1 to 6, satisfying i+k≤10; when a plurality of groups "X¹" are present in formula (1), the plurality of groups "X¹" are identical to or different from one another; and when a plurality of groups "-Si(R¹)ₙ(Y¹)₃₋ₙ" are present, the plurality of groups "-Si(R¹)ₙ(Y¹)₃₋ₙ" are identical to or different from one another). 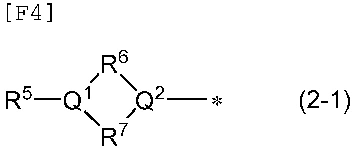 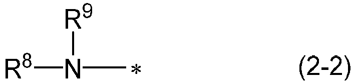 (In formula (2-1), R⁵ represents a hydrogen atom, a C1 to C8 haloalkyl group, or a monovalent cyclic group having a structure in which a halogen atom or a methyl group is bound to an aromatic ring; each of R⁶ and R⁷ independently represents a C1 to C10 hydrocarbylene group; each of Q¹ and Q² independently represents a nitrogen atom or -CR¹⁰-; when R⁵ is a hydrogen atom, Q¹ is a nitrogen atom; R¹⁰ represents a hydrogen atom or a C1 to C20 hydrocarbyl group; and "*" represents a bond.

In formula (2-2), R⁸ represents a hydrogen atom, a C1 to C8 haloalkyl group, or a monovalent cyclic group having a structure in which a halogen atom or a methyl group is bound to an aromatic ring; R⁹ represents a C1 to C20 hydrocarbyl group or a trihydrocarbylsilyl group; when R⁸ is a hydrogen atom, R⁹ is a C1 to C20 hydrocarbyl group; and "*" represents a bond.)

In formula (1), when X¹ is a group represented by formula (2-1), X¹ preferably has a nitrogen-containing heterocyclic ring, more preferably a nitrogen-containing heterocyclic ring containing a tertiary nitrogen atom, from the viewpoint of yielding a cross-linked product exhibiting more excellent fuel efficiency. The C1 to C10 hydrocarbylene group of R⁶ or R⁷ is preferably a C1 to C20 linear-chain or branched chain alkanediyl group, more preferably a methylene group or an ethylene group.

When the group of Q¹ or Q² is -CR¹⁰-, the C1 to C20 hydrocarbyl group of R¹⁰ is preferably a C1 to C10 linear-chain or branched chain alkyl group, more preferably a C1 to C3 alkyl group. Of these, R¹⁰ is preferably a hydrogen atom or a methyl group.

From the viewpoint of enhancing the fuel efficiency of the cross-linked product yielded, each of Q¹ and Q² is preferably a nitrogen atom. Particularly preferably, Q² of Q¹ and Q² is a tertiary nitrogen atom, or both Q¹ and Q² are tertiary nitrogen atoms.

R⁵ and R⁸ are groups corresponding to the group F3. Examples of the C1 to C8 haloalkyl group of R⁵ or R⁸ include a group formed by substituting any hydrogen atom of the C1 to C8 alkyl group with a halogen atom. The C1 to C8 alkyl group to be substituted with a halogen atom may be a linear-chain alkyl group or a branched chain alkyl group. Of these, a C1 to C6 alkyl group is preferred, with a C1 to C4 alkyl group being more preferred. Examples of the halogen atom include a fluorine atom, a chlorine atom, a bromine atom, and an iodine atom. Of these, a bromine atom and an iodine atom are preferred.

When each of R⁵ and R⁸ is a monovalent cyclic group having a structure in which a halogen atom or a methyl group is bound to an aromatic ring (hereinafter may also be referred to as a "monovalent cyclic group E"), examples of the aromatic ring include a benzene ring, a naphthalene ring, and an anthracene ring. Of these, a benzene ring and a naphthalene ring are preferred. In the monovalent cyclic group E, the aromatic ring may further have a substituent other than the halogen atom and the methyl group. Examples of the additional substituent include N,N-dialkylamino group. Examples of the halogen atom bound to the aromatic ring include a fluorine atom, a chlorine atom, a bromine atom, and an iodine atom. Of these, a chlorine atom and a bromine atom are preferred, with a bromine atom being more preferred.

When each of R⁵ and R⁸ is the monovalent cyclic group E, specific examples of the cyclic group E include 2-methylphenyl, 3-methylphenyl, 4-methylphenyl, 2-bromophenyl, 3-bromophenyl, 4-bromophenyl, 2-N,N-dimethylamino-3-methylphenyl, 2-N,N-dimethylamino-4-methylphenyl, 2-N,N-dimethylamino-5-methylphenyl, 2-methyl-3-N,N-dimethylaminophenyl, 3-N,N-dimethylamino-4-methylphenyl, 3-N,N-dimethylamino-5-methylphenyl, 2-N,N-dimethylamino-3-bromophenyl, 2-N,N-dimethylamino-4-bromophenyl, 2-N,N-dimethylamino-5-bromophenyl, 2-bromo-3-N,N-dimethylaminophenyl, 3-N,N-dimethylamino-4-bromophenyl, 3-N,N-dimethylamino-5-bromophenyl, 5-bromonaphthalenyl, and 5-bromoanthracenyl.

From the viewpoint of reactivity with the metal compound, R⁵ is preferably a hydrogen atom, a monovalent cyclic group E, or a C1 to C8 haloalkyl group, more preferably a hydrogen atom, a monovalent cyclic group having a structure in which a bromine atom is bound to an aromatic ring, a C1 to C8 bromoalkyl group, or a C1 to C8 chloroalkyl group. R⁸ is preferably a monovalent cyclic group E or a C1 to C8 haloalkyl group, more preferably a monovalent cyclic group having a structure in which a bromine atom is bound to an aromatic ring, a C1 to C8 bromoalkyl group, or a C1 to C8 chloroalkyl group.

The C1 to C20 hydrocarbyl group of R⁹ is preferably a C1 to C20 alkyl group, more preferably a C1 to C20 linear-chain or branched chain alkyl group. Examples of the trihydrocarbylsilyl group include a trimethylsilyl group and a triethylsilyl group.

From the viewpoint of enhancing reactivity of X¹ with the metal compound, among others, X¹ is preferably a group represented by formula (2-1). Conceivably, by incorporating a bulky structure into X¹, side reaction between the metal compound and the group F2 is suppressed during mixing of the metal compound with the compound [M], whereby a silica-containing initiator can be efficiently formed.

When A¹ is an (i+k)-valent hydrocarbyl group, specific examples include a group which is formed by removing (i+k) hydrogen atoms from a C1 to C20 chain hydrocarbon, a C3 to 20 alicyclic hydrocarbon, or a C6 to C20 aromatic hydrocarbon. Among them, a group which is formed by removing (i+k) hydrogen atoms from a chain hydrocarbon is preferred.

When A¹ is a C1 to C20 (i+k)-valent group containing at least one element selected from the group consisting of a nitrogen atom, an oxygen atom, and a sulfur atom, and no active hydrogen, specific examples include an (i+k)-valent heterocyclic group and an (i+k)-valent group having a tertiary amine moiety. The heterocyclic group is preferably a conjugated system, and examples include a single ring or a condensed ring such as pyridine, pyrimidine, pyrazine, quinoline, naphthalidine, furan, and thiophene; and a group which is formed by removing (i+k) hydrogen atoms from a ring moiety of a structure formed by linking a plurality (one or more) of the single ring or a condensed ring.

The "(i+k)" is an integer of 2 to 10. From the viewpoint of processability of the polymer composition, the "(i+k)" is preferably 2 to 6. The same description in relation to the group F2 applies to group "-Si(R¹)ₙ(Y¹)₃₋ₙ" in formula (1) . A¹ is bound to both group "-Si(R¹)ₙ(Y¹)₃₋ₙ" and a group represented by formula (2-2) via carbon atom. More specifically, A¹ is preferably bound to via carbon atoms which forms a hydrocarbon group and which are identical to or different from one another.

Specific examples of the compound [M] include compounds represented by formulas (M-1) to (M-30) and the like. These compounds [M] may be used singly or in combination of two or more species.

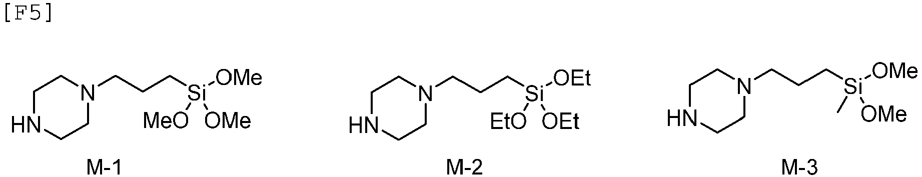

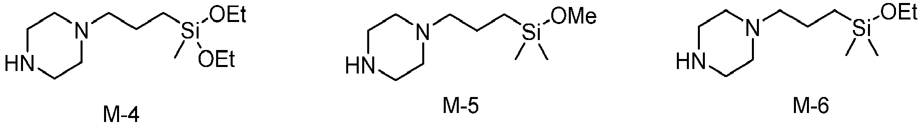

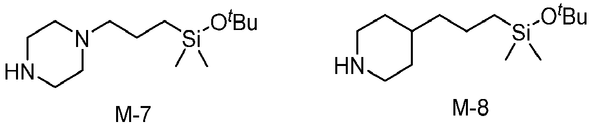

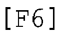

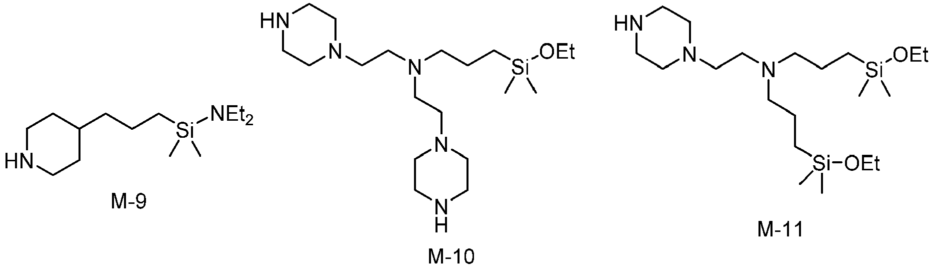

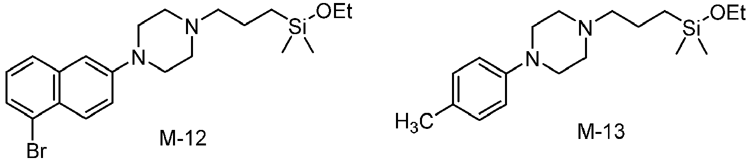

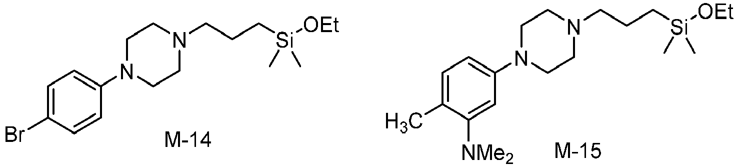

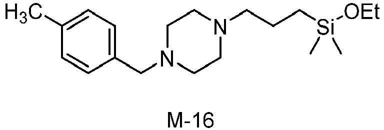

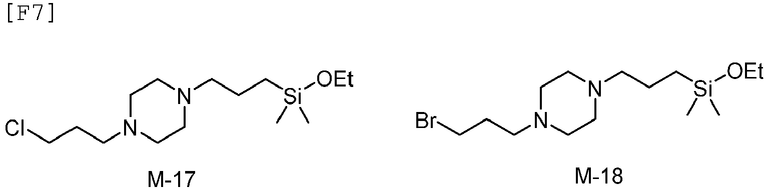

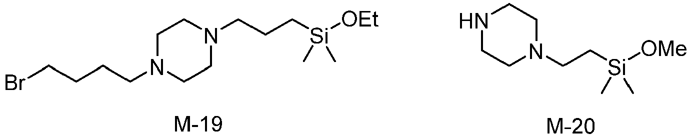

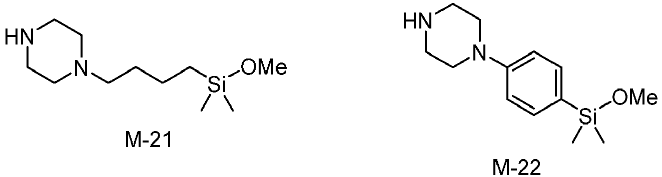

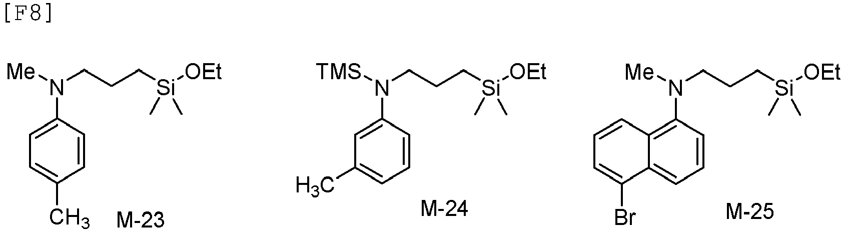

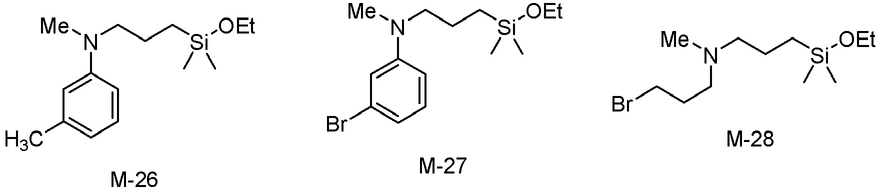

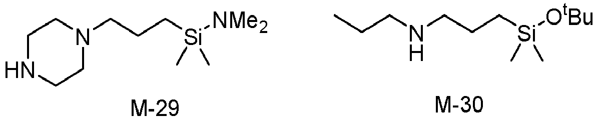

From the viewpoint of yielding a cross-linked product exhibiting further excellent low fuel consumption performance, among the above compounds, a compound having the group F1, the group F2, and the group F3 is preferably used as the compound [M]. Specifically, compounds represented by the above formulas (M-1) to (M-7), and (M-10) to (M-29), respectively, are preferably used.

The compound [M] may be synthesized through an appropriate combination of techniques generally known in organic chemistry. Specific examples of the procedure of synthesis include reacting a compound in which group Q² represented by formula (2-1) is bound to a hydrogen atom with a compound represented by "G¹-A¹-(Si(R¹)ₙ(Y¹)₃₋ₙ)ₖ" (wherein G¹ is a halogen atom) in the presence of a base, to thereby yield a compound in which X¹ in formula (1) is a group represented by formula (2-1). Alternatively, by reacting a compound in which the nitrogen atom of a group represented by formula (2-2) is bound to a hydrogen atom with a compound represented by "G¹-A¹-(Si(R¹)ₙ(Y¹)₃₋ₙ)ₖ" in the presence of a base, a compound in which X¹ in formula (1) is a group represented by formula (2-2) is produced. These reactions of synthesis may be performed in, for example, an appropriate organic solvent in the presence of an optional catalyst. However, the method of synthesizing the compound [M] is not limited to the aforementioned procedures.

### <Polymerization step>

Next, polymerization in the presence of a silicon-containing initiator will be described in detail. Examples of the conjugated diene compound involved in polymerization include 1,3-butadiene, isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, and 2-chloro-1,3-butadiene. Among them, 1,3-butadiene, isoprene, and 2,3-dimethyl-1,3-butadiene are preferred.

The modified conjugated diene-based polymer of the present disclosure may be a homopolymer of a conjugated diene compound. From the viewpoint of enhancing rubber strength, the modified conjugated diene-based polymer is preferably a copolymer formed of a conjugated diene compound and an aromatic vinyl compound. Examples of the aromatic vinyl compound involved in polymerization include styrene, 2-methylstyrene, 3-methylstyrene, 4-methylstyrene, α-methylstyrene, 2,4-dimethylstyrene, 2,4-diisopropylstyrene, 4-t-butylstyrene, 5-t-butyl-2-methylstyrene, vinylethylbenzene, divinylbenzene, trivinylbenzene, divinylnaphthalene, t-buotxystyrene, vinylbenzyldimethylamine, (4-vinylbenzyl) dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinylpyridine, diphenylethylene, and tert-amino group-containing diphenylethylene (e.g., 1-(4-N,N-dimethylaminophenyl)-1-phenylethylene). Among these aromatic vinyl compounds, styrene and α-methylstyrene are preferred.

When the modified conjugated diene-based polymer of the present disclosure is a copolymer of a conjugated diene compound and an aromatic vinyl compound, the copolymer is preferably formed of monomers including, among others, 1,3-butadiene and styrene, from the viewpoint of high living performance in anionic polymerization. From the viewpoint of successfully improving the balance in hysteresis loss at low temperature and high temperature, the above copolymer preferably includes a random copolymerization segment having an irregular distribution of the conjugated diene compound and the aromatic vinyl compound. The aforementioned copolymer may further include a block segment formed of the conjugated diene compound or the aromatic vinyl compound.

When the modified conjugated diene-based polymer of the present disclosure is a copolymer of a conjugated diene compound and an aromatic vinyl compound, the relative amount of the employed aromatic vinyl compound is preferably adjusted to 3 to 55 mass% with respect to the total amount of the conjugated diene compound and the aromatic vinyl compound involved in polymerization, more preferably 5 to 50 mass%, from the viewpoint of achieving well balance between low hysteresis loss performance and wet skid resistance of the yielded cross-linked product. The relative amount of the structural unit derived from the aromatic vinyl compound in the polymer is determined by means of a ¹H-NMR apparatus. The conjugated diene compound or the aromatic vinyl compound may be used singly or in combination of two or more species.

In the above polymerization, a compound other than the conjugated diene compound and the aromatic vinyl compound (hereinafter may also be referred to as an "additional monomer") may be used as a monomer. Examples of the additional monomer include acrylonitrile, methyl (meth)acrylate, and ethyl (meth)acrylate. The amount of the additional monomer(s) used in polymerization is preferably 10 mass% or less, more preferably 5 mass% or less, with respect to the entire amount of the monomers involved in polymerization.

The polymerization method employed in the step may be any of solution polymerization, gas phase polymerization, and bulk polymerization. Among the polymerization methods, solution polymerization is particularly preferably employed. Also, the polymerization method may be performed in a batch manner or in a continuous manner. When solution polymerization is employed, one specific procedure includes polymerization of monomers including a conjugated diene compound in a solvent (preferably an organic solvent) in the presence of a polymerization initiator and an optional vinyl content-modifying agent (hereinafter may also be referred to as a "randomizer").

As the polymerization initiator, a silicon-containing initiator may be used as a single component. Alternatively, in addition to the silicon-containing initiator, a compound containing an alkali metal element or an alkaline earth metal element but having no group F2 (hereinafter may also be referred to as an "additional initiator") may be used. Examples of the additional initiator include the aforementioned alkali metal compound and alkaline earth metal compound, and a compound which is yielded by mixing at least one of an alkali metal compound and an alkaline earth metal compound with a compound having no group F2 (hereinafter may also be referred to as an "initiation end-modifying agent").

Examples of the initiation end-modifying agent having no group F2 include a nitrogen-containing compound. Of these, a secondary amine compound is preferably used. Specific examples of such a nitrogen-containing compound include chain or cyclic secondary amine compounds such as dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tert-butyldimethylsilyl)piperazine, 1,3-ditrimethylsilyl-1,3,5-triazinane, N-trimethylsilylpiperazine, 1,3,3-trimethyl-6-azabicyclo[3.2.1]octane, and 1-propyl-3-azabicyclo[3.2.2]nonane.

In the polymerization, the amount of the polymerization initiator used (the total amount of the silicon-containing initiator and the additional initiator) is preferably adjusted to 0.01 to 20 mmol with respect to 100 g of the monomers employed in the synthesis of the modified conjugated diene-based polymer, more preferably to 0.05 to 15 mmol. Among the aforementioned polymerization initiators, the amount of the silicon-containing initiator with respect to the total amount of the polymerization initiators (i.e., the metal compounds) used in polymerization of the monomers is preferably adjusted to 50 mol% or more, more preferably to 60 mol% or more, still more preferably to 80 mol% or more.

In one procedure of polymerization in the presence of a silicon-containing initiator (this procedure is referred to as [1A]), the metal compound is mixed with the compound [M] in advance, to thereby synthesize the silicon-containing initiator outside the system, and the thus-obtained silicon-containing initiator is mixed with a monomer for polymerization. In another one procedure of polymerization in the presence of a silicon-containing initiator (this procedure is referred to as [2A]), the compound [M] and the metal compound are mixed in a reactor where a monomer is present, to thereby synthesize the silicon-containing initiator in the system for polymerization. All these procedures correspond to an embodiment of "polymerizing a monomer including a conjugated diene compound in the presence of a silicon-polymerization initiator prepared by mixing the metal compound with the compound [M]." From the viewpoint of facilitating the operation, the procedure [2A] is preferred. The procedure [1A] is preferred, from the viewpoint of enhancing the low hysteresis loss performance and low fuel consumption of the yielded cross-linked product.

When polymerization in the presence of a silicon-containing initiator is performed through the procedure [1A], the compound [M] and the metal compound may be mixed in an organic solvent. Any organic solvent may be used as the organic solvent used in formation of the silicon-containing initiator, so long as the solvent is inert to the compound [M] and the metal compound. Examples of the solvent include aliphatic hydrocarbon, alicyclic hydrocarbon, and aromatic hydrocarbon. Also, when the silicon-containing initiator is formed by use of the compound [M] and the metal compound, an optional catalyst (e.g., a tertiary amine compound) may be used. In the procedure [1A], the temperature is preferably - 20°C to 150°C, more preferably 0 to 120°C.

When the metal compound is mixed in advanced with the compound [M] so as to form the silicon-containing initiator outside the system, a part of the monomer may be caused to be present. By virtue of the presence of the monomer during mixing of the metal compound with the compound [M], the efficiency of incorporating the group F2 of the silicon-containing initiator into the modified conjugated diene-based polymer can be enhanced, whereby the good fuel efficiency of the cross-linked product may further be improved, which is preferred. Examples of the monomer added during formation of the silicon-containing initiator include a conjugated diene compound and an aromatic vinyl compound. The conjugated diene compound is preferably at least one of butadiene and isoprene, and the aromatic vinyl compound is preferably at least one of styrene and α-styrene.

When the silicon-containing initiator prepared by mixing the metal compound in advance with the compound [M] is added to a reactor where a monomer is present, no particular limitation is imposed on the method of adding the silicon-containing initiator. Examples of the addition method include addition in a batch manner, addition in a divided manner, and addition in a continuous manner. When the silicon-containing initiator is added in a batch manner to the reactor, the molecular weight distribution of the yielded modified conjugated diene-based polymer can be suitably narrowed. When the silicon-containing initiator is added in a divided manner to the reactor, the efficiency of incorporating the silicon-containing initiator into a polymerization end tends to be enhanced, to thereby achieve suitable processability of the yielded modified conjugated diene-based polymer.

When the silicon-containing initiator is added in a divided manner to the reactor, a further addition of the silicon-containing initiator conducted after the first addition may be performed before or after the initiation of polymerization of a monomer. From the viewpoint of enhancing the efficiency of incorporating the initiator into a polymerization end, the further addition of the silicon-containing initiator conducted after the first addition is performed after the initiation of polymerization of a monomer. That is, preferably, polymerization is initiated through addition of the silicon-containing initiator in an early stage, and then the silicon-containing initiator is further added to the reactor. When the silicon-containing initiator is added in a divided manner, the ratio by mass of the amount of first addition to the sum of the amount of the first addition and the amount of addition(s) after the first addition is preferably 9:1 to 1:1.

The randomizer may be used for the purpose of adjusting the vinyl bond content (i.e., a percent amount of vinyl bonds in the polymer) or other reasons. As the randomizer, a compound having at least one element of oxygen and nitrogen and not having any of active hydrogen, an alkali metal element, and an alkaline earth metal element is preferably used. A randomizer differs from a polymerization initiator in that the randomizer does not have any of an alkali metal element and an alkaline earth element.

Examples of the randomizer include nitrogen-containing compounds such as triethylamine, pyridine, N-methylmorpholine, and tetramethylethylenediamine; and oxygen-containing compound such as dimethoxybenzene, tetrahydrofuran, dimethoxyethane, diethylene glycol dibutyl ether, diethylene glycol dimethyl ether, 2,2-di(2-tetrahydrofuryl)propane, and 2-(2-ethoxyethoxy)-2-methylpropane. These randomizers may be used singly or in combination of two or more species.

When polymerization is performed with a randomizer, no particular limitation is imposed on the timing of adding the randomizer to the reactor, and the timing may be appropriately adjusted in such a range that good fuel efficiency of the modified conjugated diene-based polymer is not impaired. Also, no particular limitation is imposed on the method of adding a randomizer, and examples of the addition method include addition in a batch manner, addition in a divided manner, and addition in a continuous manner.

Examples of the specific mode of the order of addition of components including a randomizer include the following modes [1B] to [4B]. Addition of the randomizer may be performed through one of the modes [1B] to [4B] or two or more of the modes in combination.
Mode [1B]: In the procedure [1A], the monomer and the randomizer are added to the reactor before addition of the silicon-containing initiator to the reactor.
Mode [2B]: In the procedure [1B], the monomer and the compound [M] are added with the randomizer to the reactor before addition of the metal compound to the reactor.
Mode [3B]: In the procedure [1B], the monomer, the compound [M], and the metal compound are added to the reactor, and then the randomizer is added to the reactor.
Mode [4B]: In the procedure [1A], the monomer and the silicon-containing initiator are added to the reactor, and then the randomizer is added to the reactor.

Among the above modes, the mode [3B]; i.e., a step of adding of the metal compound to the reactor, followed by adding the randomizer (hereinafter may also be referred to as a "post-addition step") is preferred, since widening of the molecular weight distribution of the yielded modified conjugated diene-based polymer can be suppressed. When the polymerization step includes a post-addition step, specific examples of the mode include a mode [3B-1] in which the entire portion of the randomizer is added to the reactor where the monomer, the compound [M], and the metal compound are present; and a mode [3B-2] in which the metal compound is added to the reactor where the monomer, the compound [M], and the randomizer are present, to thereby initiate polymerization, followed by additionally adding the randomizer (i.e., addition of the randomizer in a divided manner). Among these modes, the mode [3B-1] is preferred, since widening of the molecular weight distribution of the modified conjugated diene-based polymer can be effectively suppressed, while the number of steps decreases.

As the organic solvent employed in polymerization, an organic solvent which is not involved in polymerization reaction is preferably used. Specific examples of the organic solvent employed in polymerization include an aliphatic hydrocarbon, an alicyclic hydrocarbon, and an aromatic hydrocarbon. Among them, a C3 to C8 hydrocarbon is preferred. Specific examples include propane, n-butane, isobutane, n-pentane, isopentane, n-hexane, cyclohexane, propene, 1-butene, isobutene, trans-2-butene, cis-2-butene, 1-hexene, 2-hexene, benzene, toluene, xylene, ethylbenzene, heptane, cyclopentane, methylcyclopentane, methylcyclohexane, 1-pentene, 2-pentene, and cyclohexene. These organic solvents may be used singly or in combination of two or more species.

When solution polymerization is conducted, the monomer concentration of the reaction solvent is preferably 5 to 50 mass%, more preferably 10 to 30 mass%, from the viewpoint of maintaining the balance between productivity and facility in controlling polymerization. The temperature of polymerization reaction is preferably -20°C to 150°C, more preferably 0 to 120°C. Also, the polymerization reaction is preferably conducted at such a pressure sufficiently maintaining the monomers substantially in a liquid phase. Such pressure can be achieved through, for example, a method including pressurizing a reactor with a gas which is not involved in polymerization reaction.

Through such polymerization reaction, a modified conjugated diene-based polymer having the group F2 at one end and an active end at the other end can be yielded. The weight average molecular weight (Mw) (as reduced to polystyrene) of the thus-produced modified conjugated diene-based polymer, which is determined through gel permeation chromatography (GPC), is preferably 5.0×10⁴ to 1.0×10⁶. When Mw is 5.0×10⁴ or higher, tensile strength, low heat generation, and wear resistance of the cross-linked product can be satisfactorily secured. When Mw is 1.0×10⁶ or lower, processability of a polymer composition containing the modified conjugated diene-based polymer can be enhanced. Both cases are preferred. More preferably, Mw is 8.0×10⁴ to 8.0×10⁵, still more preferably 1.0×10⁵ to 5.0×10⁵. In the present specification, Mw of the modified conjugated diene-based polymer is a weight average molecular weight calculated from all the peaks in a GPC curve (i.e., total weight average molecular weight).

The vinyl bond content of the modified conjugated diene-based polymer having an active end is preferably 15 to 70 mol%. When the vinyl bond content is 15 mol% or higher, grip performance can be enhanced, whereas when the vinyl bond content is 70 mol% or lower, a drop in wear resistance of the produced vulcanized rubber can be suppressed. Both cases are preferred. The vinyl bond content is more preferably 20 mol% or higher, still more preferably 30 mol% or higher, yet more preferably 40 mol% or higher. Also, the vinyl bond content is preferably 70 mol% or lower, more preferably 68 mol% or lower. Notably, as used herein, the "vinyl bond content" refers to a ratio of the structural units having a 1,2-bond to all the butadiene structural units in the modified conjugated diene-based polymer and is a value determined through ¹H-NMR.

Polymerization may be terminated by, for example reacting a modified conjugated diene-based polymer having an active end with an alcohol or hydrogen. Alternatively, polymerization may be terminated by reacting a modified conjugated diene-based polymer having an active end with an end-modifying agent or a coupling agent. The end-modifying agent is a compound which has a functional group forming a covalent bond or interacting with a filler and which can react with an active end of the polymer. Through reaction of a modified conjugated diene-based polymer having an active end with an end-modifying agent, there can be yielded a modified conjugated diene-based polymer into which a functional group forming a covalent bond or interacting with a filler has been incorporated at a polymerization termination end. Notably, as used herein, the term "active end" refers to a moiety at an end of a molecular chain other than a structure derived from a monomer having a carbon-carbon double bond (more specifically, a metal end).

No particular limitation is imposed on the end-modifying agent, so long as the agent is a compound which has a functional group forming a covalent bond or interacting with a filler (particularly, silica) and which can react with an active end of the modified conjugated diene-based polymer. Among such compounds, a compound which contains at least one atom selected from the group consisting of nitrogen, sulfur, phosphorus, oxygen, and silicon and in which no active hydrogen is bound to the atom is preferably used as the end-modifying agent. Particularly, a compound which has one or more functional groups selected from the group consisting of an amino group, a group having a carbon-nitrogen double bond, a nitrogen-containing heterocyclic group, a phosphino group, a cyclic ether group, a cyclic thioether group, a protected hydroxyl group, a protected thiol group, and a hydrocarbyloxysilyl group and which can react with a polymerization active end is preferably used as the end-modifying agent. The amino group is preferably a protected primary or secondary amino group or a tertiary amino group. No particular limitation is imposed on the aforementioned compound, and for example, one or more members of the compound disclosed in Japanese Patent Application Laid-Open (kokai) No. 2003-171418 and WO 2021/112167 are suitably used.

Examples of the coupling agent include dibutyldichlorosilicon, methyltrichlorosilicon, methyldichlorosilicon, tetrachlorosilicon (silicon tetrachloride), silicon tetrabromide, silicon tetraiodide, trichloromethoxysilane, tribromomethoxysilane, trimethoxysilane, tetramethoxysilane, tetrachlorotin (tin tetrachloride), tetrabromotin, trichlorobutyltin, trichloromethyltin, trichloroethyltin, trichlorophenyltin, trichlorooctyltin, trichlorophosphine, divinylbenzene, and trichloropropane. Alternatively, there may be used, as the coupling agent, a multi-functional compound which has one or more atoms selected from the group consisting of nitrogen, sulfur, and oxygen, with no active hydrogen being bound to the atoms, and which has a plurality of reaction sites with an active end of the modified conjugated diene-based polymer (e.g., tetraglycidyl-1,3-bisaminomethylcyclohexane, N,N,N',N'-tetra(3-trimethoxysilylpropyl)ethylenediamine, and bis(3-trimethoxysilylpropyl)-[2-(2,2-dimethoxy-1-aza-2-silacyclopentane)ethyl]amine).

Reaction of the modified conjugated diene-based polymer having an active end with the end-modifying agent or a coupling agent may be performed as, for example, solution reaction. The solution reaction may be conducted by use of a solution containing an unreacted monomer remaining after completion of polymerization reaction. In an alternative reaction procedure, the modified conjugated diene-based polymer contained in the solution is isolated, and the isolated polymer is dissolved in an appropriate solvent (e.g., cyclohexane). The reaction may be performed in a batch manner or a continuous manner. In this case, no particular limitation is imposed on the method of adding the end-modifying agent or the coupling agent, and examples of the addition method include addition in a batch manner, addition in a divided manner, and addition in a continuous manner.

The amount of the end-modifying agent or the coupling agent may be appropriately adjusted in accordance with the type of the compound employed in the reaction. The amount of the end-modifying agent or the coupling agent used is preferably 0.1 mol eq. or more, more preferably 0.3 to 1.5 mol eq., with respect to the amount of the metal element which is contained in the polymerization initiator and which is involved in the polymerization reaction. The reaction temperature is generally the same as the temperature of polymerization reaction and is preferably -20 to 150°C, more preferably 0 to 120°C. When the temperature of the modification reaction is low, the viscosity of the polymer solution tends to increase, whereas when the modification reaction temperature is high, a polymerization active end tends to be deactivated. The reaction time is preferably 1 minute to 5 hours, more preferably 2 minutes to 1 hour.

In the case where the modified conjugated diene-based polymer contained in the reaction mixture is isolated, a known solvent removal method (e.g., steam stripping), drying (e.g., a thermal treatment), etc. may be employed.

The weight average molecular weight (as reduced to polystyrene) of the modified conjugated diene-based polymer after termination of polymerization reaction, determined through GPC is preferably 1.0×10⁵ to 2.0×10⁶, from the viewpoint of providing a cross-linked product having high mechanical strength and excellent fuel cost performance. The weight average molecular weight is more preferably 1.8×10⁵ to 1.5×10⁶, still more preferably 2.0×10⁵ to 1.2×10⁶. Notably, the weight average molecular weight of the modified conjugated diene-based polymer corresponds to a weight average molecular weight calculated from all the peaks in a GPC curve measured through GPC (i.e., total weight average molecular weight).

The molecular weight distribution (Mw/Mn); i.e., a ratio of weight average molecular weight (Mw) to number average molecular weight (Mn), of the modified conjugated diene-based polymer, the molecular weights being determined through GPC, is preferably 4.0 or less, more preferably 3.5 or less. The molecular weight distribution (Mw/Mn) is generally 1.0 or higher.

According to the production method including described polymerization step and the modification step described above, modified conjugated diene-based polymers represented by formula (3) can be produced. 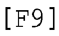 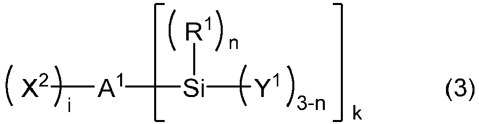 (In formula (3), X² represents a group represented by formula (4-1) or (4-2); A¹, R¹, Y¹, n, i, and k have the same definitions as those in formula (1); and when a plurality of groups "X²" are present, the plurality of groups "X²" are identical to or different from one another.) 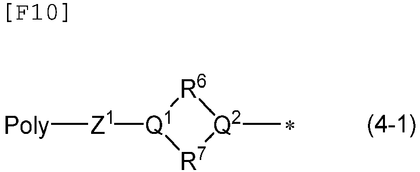 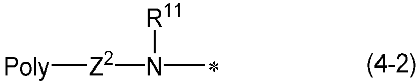 (In formula (4-1), Z¹ represents a single bond, a C1 to C8 alkanediyl group, or group "*³-Ar¹-W¹-"; Ar¹ represents a divalent aromatic ring group; W¹ represents a single bond or a methylene group; "*³" represents a bond to Q¹; R⁶, R⁷, Q¹, and Q² have the same definitions as those in formula (2-1); when Z¹ is a single bond, Q¹ is a nitrogen atom; Poly represents a modified or unmodified conjugated diene-based polymer chain; and "*" represents a bond.

In formula (4-2), Z² represents a single bond, a C1 to C8 alkanediyl group, or group "*⁴-Ar¹-W¹-"; Ar¹ represents a divalent aromatic ring group; W¹ represents a single bond or a methylene group; "*⁴" represents a bond to -NR¹¹-; R¹¹ represents a hydrogen atom, a C1 to C20 hydrocarbyl group, or a trihydrocarbylsilyl group; Poly represents a modified or unmodified conjugated diene-based polymer chain; and "*" represents a bond.)

In formula (3), the same definitions as employed in formula (1) apply to A¹, R¹, Y¹, n, i, and k. In formulas (4-1) and (4-2), the modified or unmodified conjugated diene-based polymer chain is a structure corresponding to a conjugated diene-based polymer formed through the aforementioned polymerization step.

The reaction mechanism of polymerization of a monomer in the presence of the silicon-containing initiator will be described with reference to specific examples. When a compound in which X¹ is a group represented by formula (2-1) and R⁵ is a group having a halogen atom bound to an aromatic ring in formula (1) is used as the silicon-containing initiator, the halogen atom in R⁵ is substituted by a metal (i.e., an alkali metal or an alkaline earth metal) atom, to thereby form a reaction site in R⁵, from which polymerization is initiated. For example, when n-butyllithium is used as the metal compound, and a compound in which X¹ is a group represented by formula (2-1) and R⁵ is a 4-bromophenyl group in formula (1) is used as the silicon-containing initiator, the reaction scheme is represented by the following formula (6). In the formula (6), a wavy line represents a conjugated diene-based polymer chain.

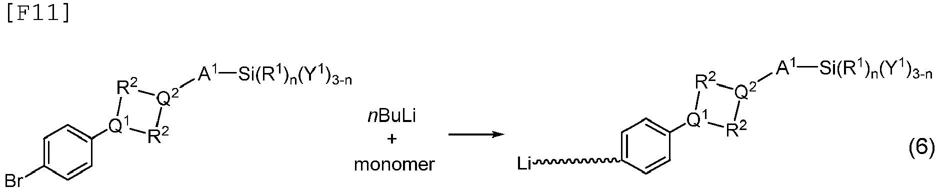

When a compound in which X¹ is a group represented by formula (2-1) and R⁵ is a group having a methyl group bound to an aromatic ring in formula (1) is used as the silicon-containing initiator, one hydrogen atom of the methyl group in R⁵ is substituted by a metal atom, to thereby form a reaction site in R⁵, from which polymerization is initiated. For example, when n-butyllithium is used as the metal compound, and a compound in which X¹ is a group represented by formula (2-1) and R⁵ is a 4-methylphenyl group in formula (1) is used as the silicon-containing initiator, the reaction scheme is represented by the following formula (7). In formula (7), a wavy line represents a conjugated diene-based polymer chain.

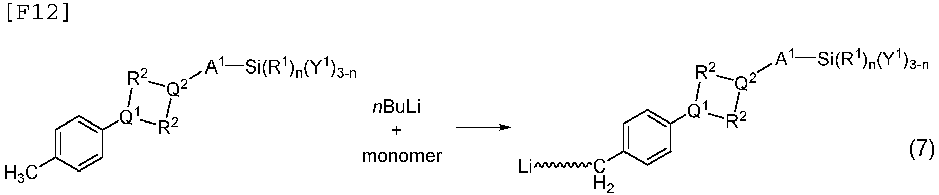

As other examples, when a compound in which X¹ is a group represented by formula (2-1), Q¹ is a nitrogen atom, and R⁵ is a hydrogen atom or a haloalkyl group in formula (1), or a compound in which R⁵ in formula (2-1) is a haloalkyl group is used as the silicon-containing initiator, there can be yielded a modified conjugated diene-based polymer having a structure in which a conjugated diene-based polymer chain is bound, directly or via an alkanediyl group, to Q¹ in formula (4-1).

### <<Polymer composition>>

In addition to the aforementioned modified conjugated diene-based polymer (hereinafter may also be referred to as a "modified conjugated diene-based polymer [A]"), the polymer composition of the present disclosure may further contain the following components.

### [B] Silica

The polymer composition of the present disclosure may contain silica [B]. The amount of silica [B], with respect to 100 parts by mass of the rubber component containing modified conjugated diene-based polymer [A], is preferably 20 to 120 parts by mass, more preferably 30 to 100 parts by mass. When the amount of silica [B], with respect to 100 parts by mass of the rubber component containing modified conjugated diene-based polymer [A], is 20 parts by mass or more, low-loss performance, fracture resistance, and wear resistance of the polymer composition can be sufficiently enhanced, whereas when the amount of silica [B] is 120 parts by mass or less, processability of the polymer composition can be sufficiently enhanced.

As used herein, the "rubber component" contained in the polymer composition refers to a polymer that can provide, through curing, a cured product exhibiting rubber elasticity. The cured product evokes considerable deformation at room temperature through application of small force (e.g., deformation of twice or more elongation by stretching at room temperature), and rapidly returns to substantially its original form when the force is removed.

No particular limitation is imposed on the silica [B], and examples of the silica [B] include wet silica (hydrous silicic acid), dry silica (silicic anhydride), calcium silicate, and aluminum silicate. Of these, wet silica is preferred. The silica [B] may be used singly or in combination of two or more species. The BET specific surface area (values determined in accordance with ISO 5794/1) of the silica [B] is preferably 40 to 350 m²/g, more preferably 80 to 350 m²/g, still more preferably 120 to 350 m²/g. A silica product having a BET specific surface area falling within the range is advantageous, from the viewpoint of achieving both reinforcement of the rubber products produced from the composition and good dispersibility of silica in modified conjugated diene-based polymer [A]. As such silica products, there may be used commercial products such as "Nipsile AQ" (BET specific surface area: 205 m²/g) and "Nipsil KQ" (products of Tosoh Silica Corporation), and "Ultrasil VN3" (product of Degussa, BET specific surface area: 175 m²/g).

As silica products contained in the polymer composition, two or more species each having different specific surface areas may be used. More specifically, there may be employed a first silica species having a CTAB (cetyltrimethylammonium bromide) specific surface area of 180 m²/g or more, a BET specific surface area of 185 m²/g or more, and an aggregate size of 45 nm or greater, in combination with a second silica species having a CTAB specific surface area of 95 m²/g or less and a BET specific surface area of 100 m²/g or less. The CTAB specific surface area may be determined in accordance with ASTM D3765-92.

One embodiment of the polymer composition of the present disclosure contains a first silica species having a CTAB specific surface area of 180 m²/g or more, a BET specific surface area of 185 m²/g or more, and an aggregate size of 45 nm or greater, in combination with a second silica species having a CTAB specific surface area of 95 m²/g or less and a BET specific surface area of 100 m²/g or less. By use of the aforementioned first and second silica species, the first silica having a small mean primary particle size and a relatively large aggregate size can be suitably dispersed in the rubber component. As a result, dispersibility of silica can be improved, and excellent rubber breakage strength, wear resistance, fuel efficiency, and processabily can be attained.

The CTAB specific surface area of the first silica species is preferably 190 m²/g or more, more preferably 195 m²/g or more, still more preferably 197 m²/g or more. When the CTAB specific surface area is less than 180 m²/g, difficulty is generally encountered in attaining sufficiently improved rubber breakage strength and wear resistance. The CTAB specific surface area is preferably 350 m²/g or less, more preferably 300 m²/g or less, still more preferably 250 m²/g or less. When the CTAB specific surface area is in excess of 350 m²/g, dispersibility of silica is impaired to evoke aggregation. In such as a case, the physical properties tend to be impaired.

The BET specific surface area of the first silica species is preferably 190 m²/g or more, more preferably 195 m²/g or more, still more preferably 210 m²/g or more. When the BET specific surface area is less than 185 m²/g, difficulty is generally encountered in attaining sufficiently improved rubber breakage strength and wear resistance. The BET specific surface area is preferably 350 m²/g or less, more preferably 300 m²/g or less, still more preferably 260 m²/g or less. When the BET specific surface area is in excess of 350 m²/g, dispersibility of silica is impaired to evoke aggregation. In such as a case, the physical properties tend to be impaired. The BET specific surface area may be determined in accordance with ASTM D3037-81.

The aggregate size of the first silica species is 45 nm or greater, preferably 50 nm or greater, more preferably 55 nm or greater, still more preferably 60 nm or greater. Also, the aggregate size species is preferably 100 nm or smaller, more preferably 80 nm or smaller, still more preferably 70 nm or smaller, particularly preferably 67 nm or smaller. When the first silica species has such an aggregate size, excellent fuel efficiency and wear resistance can be attained, while good dispersibility (processability) is maintained. The aggregate size of silica may be determined though a method disclosed in Japanese Patent Application Laid-Open (kokai) No. 2011-140613.

The mean primary particle size of the first silica species is preferably 25 nm or small, more preferably 22 nm or small, still more preferably 17 nm or smaller, particularly preferably 14 nm or smaller. No particular limitation is imposed on the lower limit of the mean primary particle size. The mean primary particle size is preferably 3 nm or greater, more preferably 5 nm or greater, still more preferably 7 nm or greater. Although the first silica species has such a small mean primary particle size, by virtue of the structure of carbon black having the aforementioned aggregate size, dispersibility of silica (processability) can be more improved, whereby fuel efficiency and wear resistance can be further improved. The mean primary particle size of silica can be determined by observing the silica species under a transmission or a scanning electron microscope; measuring particle sizes of 400 or greater primary particles of silica observed in a vision field; and averaging the measurements.

The CTAB specific surface area of the second silica species is preferably 10 m²/g or more, more preferably 20 m²/g or more, still more preferably 30 m²/g or more. When the CTAB specific surface area is less than 10 m²/g, reinforcement performance decreases, and difficulty may be encountered in securing dynamic strength and wear resistance required for the polymer composition for obtaining rubber for tires. The CTAB specific surface area is preferably 80 m²/g or less, more preferably 60 m²/g or less, still more preferably 50 m²/g or less. When the CTAB specific surface area exceeds 95 m²/g, dispersibility of silica is impaired, and difficulty may be countered in improving rubber breakage strength and wear resistance.

The BET specific surface area of the second silica species is preferably 10 m²/g or more, more preferably 20 m²/g or more, still more preferably 30 m²/g or more. When the BET specific surface area is less than 10 m²/g, reinforcing performance decreases. In such a case, difficulty may be encountered in securing dynamic strength and wear resistance required for a polymer composition for obtaining rubber for tires. The BET specific surface area is preferably 85 m²/g or less, more preferably 60 m²/g or less, still more preferably 50 m²/g or less. When the BET specific surface area is in excess of 100 m²/g, dispersibility of silica decreases, and difficulty is conceivably encountered in enhancement of fracture strength and wear resistance of rubber.

The mean primary particle size of the second silica species is preferably 20 nm or greater, more preferably 25 nm or greater, still more preferably 30 nm or greater, particularly preferably 35 nm or greater, most preferably 55 nm or greater. Also, the mean primary particle size is preferably 500 nm or smaller, more preferably 200 nm or smaller, still more preferably 100 nm or smaller, particularly preferably 70 nm or smaller. By virtue of such a mean primary particle size, rubber breakage strength and wear resistance can be improved.

### [C] Carbon black

From the viewpoints of fracture characteristics and wear resistance, the polymer composition of the present disclosure preferably contains carbon black [C]. No particular limitation is imposed on the carbon black, and examples thereof include carbon black products of a grade such as GPF, FEF, HAF, ISAF, or SAF. No particular limitation is imposed on the nitrogen adsorption specific surface area (N₂SA) of carbon black, and it is preferably 50 to 200 m²/g, more preferably 70 to 150 m²/g, from the viewpoint of further enhancement of the effects of the present disclosure and the like. The nitrogen adsorption specific surface area (N₂SA) is defined as a value obtained by measuring the amount of nitrogen adsorbed on the surface of carbon black through JIS K6217-2:2001 "part 2: Determination of specific surface area, Nitrogen adsorption method, Single point method." The carbon black products may be used singly or in combination of two or more species. Also, the amount of carbon black is preferably 1 to 150 parts by mass, more preferably 5 to 120 parts by mass with respect to 100 parts by mass of modified conjugated diene-based polymer [A].

### [Other fillers]

The polymer composition of the present disclosure may contain, in addition to the aforementioned silica [B] and carbon black [C], an additional filler. Examples of the additional filler include alumina (Al₂O₃) such as γ-alumina or α-alumina; alumina monohydrate (Al₂O₃·H₂O) such as bohemite or diaspore; aluminum hydroxide [Al(OH)₃] such as gibbsite or bayerite; aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiOz), titanium black (TiO₂ₙ₋₁), calcium oxide (CaO), calcium hydroxide [Ca(OH)₂], aluminum magnesium oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (e.g., Al₂SiO₅ or Al₄·3SiO₄·5H₂O), magnesium silicate (e.g., Mg₂SiO₄ or MgSiO₃), calcium silicate (e.g., Ca₂SiO₄), aluminum calcium silicate (e.g., Al₂O₃·CaO·2SiO₂), magnesium calcium silicate (CaMgSiO₄), calcium carbonate (CaCO₃), zirconium oxide (ZrO₂), zirconium hydroxide [ZrO(OH)₂·nH₂O], and zirconium carbonate [Zr(CO₃)₂]; and crystalline aluminosilicate salts such as various zeolites, which contains hydrogen, an alkali metal, or an alkaline earth metal for compensating electric charge.

In the polymer composition of the present disclosure, the filler (including silica [B] and carbon black [C]) content is preferably 30 parts by mass or more, more preferably 40 parts by mass or more, with respect to 100 parts by mass of rubber component(s). Also, the filler content (including silica [B] and carbon black [C]) is preferably 150 parts by mass or less, more preferably 130 parts by mass or less. When the filler content satisfies the above conditions, in the case where the polymer composition of the present disclosure is used for producing tire treads, low rolling resistance, braking distance on the wet road surface, handling performance on the dry road surface, and wear resistance of the tire can be further improved in a highly well-balanced manner.

### [D] Other rubber components

In the present disclosure, at least one diene-based rubber may be used as a rubber component different from modified conjugated diene-based polymer [A]. Such a component is selected from among, for example, at least one diene rubber selected from natural rubber, isoprene rubber, butadiene rubber, emulsion-polymerized styrene-butadiene rubber, solution-polymerized styrene-butadiene rubber, butyl rubber, halogenated butyl rubber, and ethylene-propylene rubber. Among them, the polymer composition preferably contains at least one species selected from natural rubber, butadiene rubber, and styrene-butadiene rubber. When components [D] and [A] are mixed together, the components may be mixed during kneading by means of a Banbury mixer, a roller, or the like, which is generally carried out. Alternatively, component [D] may be added to a solution of polymer [A] after polymerization, and then the mixture is dried, to thereby complete mixing.

The proportion between component [A] and component [D] is as follows. The amounts of component [A] and component [D], with respect to 100 parts by mass of rubber components (component [A] + component [D]), are preferably 5 to 45 parts by mass and 65 to 95 parts by mass, respectively, more preferably 10 to 40 parts by mass and 60 to 90 parts by mass, respectively. Particularly, relative amounts of 15 to 35 parts by mass and 65 to 85 parts by mass, respectively, are optimum, for serving as a polymer composition for producing tires.

In the present disclosure, a part or the entirety of other rubber components [D] may employ a liquid rubber, from the viewpoint of further enhancement of dry grip performance, wet grip performance, ice grip performance, and blow out resistance.

Examples of the liquid rubber include liquid polyisoprene (liquid IR), liquid polybutadiene (liquid BR), liquid styrene-butadiene copolymer (liquid SBR), and liquid ethylene-propylene copolymer (liquid EP). For example, a liquid SBR having a weight average molecular weight of 1,000 to 100,000, preferably 2,000 to 80,000 may be used. The weight average molecular weight refers to a weight average molecular weight (reduced to polystyrene) determined through gel permeation chromatography (GPC). The liquid rubber exhibits a flowability at 23°C.

### [E] Thermoplastic/thermosetting resin

The polymer composition of the present disclosure may contain thermoplastic/thermosetting resin [E] (hereinafter may also be referred to simply as "resin [E]"). The resin [E] is preferably at least one species selected from the group containing of a styrene-based resin, polyethylene, a C5-type resin, a C9-type resin, a C5/C9-type resin, a dicyclopentadiene-based resin, an alkyl-phenolic resin, and a terpene-based resin, from the viewpoint of providing a cross-linked product having more excellent properties including mechanical strength, wear resistance, and anti-crack-propagation property. These resins [E] may be used singly or in combination of two or more species.

The styrene-based resin is a polymer obtained from a styrene-based monomer. Among such polymers, preferred is a styrene-based polymer having structural units derived from a styrene-based monomer in an amount of 20 mass% or more with respect to the entire amount of monomer units of the styrene-based resin. Examples of the styrene-based monomer include styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, and p-chlorostyrene. Among them, the styrene-based monomer is preferably at least one of styrene and α-methylstyrene.

The styrene-based resin may be a homopolymer formed through polymerization of one single styrene-based monomer, or a copolymer formed through co-polymerization of two or more styrene-based monomers. Alternatively, the styrene-based resin may be a copolymer of a styrene-based monomer and another monomer which can co-polymerize with the styrene-based monomer. Examples of the above additional monomer include acrylonitriles such as acrylonitrile and (meth)acrylonitrile; unsaturated carboxylic acids such as acrylic acids and (meth)acrylic acids; unsaturated carboxylic acid esters such as methyl acrylate and methyl (meth)acrylate; dienes such as chloroprene, butadiene, and isoprene; olefins such as 1-butene and 1-pentene; and α,β-unsaturated carboxylic acid or anhydride such as maleic anhydride.

The softening point of the styrene-based resin is preferably 30°C or higher, more preferably 60°C or higher, still more preferably 80°C or higher. When the softening point is 30°C or higher, the effect of improving the anti-crack-propagation property of the cross-linked product tends to be easily attained. The softening point of the styrene-based resin is preferably 160°C or lower, more preferably 130°C or lower, still more preferably 100°C or lower. When the softening point is 160°C or lower, dispersibility of the resin is enhanced. In this case, anti-crack-propagation property, wear resistance, and breaking strength can be readily improved. In the present disclosure, the softening point of the styrene-based resin is determined through a method defined in JIS K 6220-1:2015 by means of a ring and ball softening point apparatus. The temperature at which a ball placed on a sample falls to a base plate by softening the sample is employed as the softening point.

As the styrene-based resin, there may be used a block polymer (thermoplastic elastomer) including a conjugated diene-based resin block as a soft segment and a polystyrene-based block as a hard segment. Use of such a block polymer is preferred, since the effect of improving the anti-crack-propagation property can be further enhanced. In the conjugated diene-based resin block contained in the block polymer, a part of C-C double bonds in structural units derived from the conjugated diene compound may be hydrogenated.

Examples of the conjugated diene compound forming the aforementioned conjugated diene-based resin block include 1,3-butadiene, isoprene, 2,3-dimethyl-1,3-butadiene, 1,3-pentadiene, and 1,3-hexadiene. These conjugated diene compounds may be used singly or in combination of two or more species. Of these, at least one of 1,3-butadiene and isoprene is preferred as the conjugated diene compound. The conjugated diene unit content of the block polymer is preferably 20 mass% or more, more preferably 30 mass% or more. Also the conjugated diene unit content is preferably 80 mass% or less, more preferably 70 mass% or lower.

From the viewpoint of achieving higher breaking strength, the ratio of the polystyrene-based block in the aforementioned block polymer is preferably 20 mass% or more. Also, the polystyrene-based block content is preferably 80 mass% or less, more preferably 70 mass% or less. The polystyrene-based block content, conjugated diene-based resin block content, and conjugated diene unit content of the block polymer can be calculated by corresponding integral proportions obtained by a ¹H-NMR spectrum.

Specific examples of the block polymer include styrene-butadiene block copolymer, styrene-isoprene block copolymer, an epoxidated product of styrene-butadiene block copolymer, and a block copolymer in which a part of conjugated diene-based resin blocks of a styrene-butadiene block copolymer or a styrene-isoprene block copolymer have been hydrogenated. More specific examples include styrene-butadiene-styrene block copolymer (SBS), styrene-isoprene-styrene block copolymer (SIS), styrene-butadiene-butylene-styrene block copolymer (SBBS), an epoxidated product of styrene-butadiene-styrene block copolymer, and hydrogenated products of these copolymers. Among these block polymers, from the viewpoint of sufficient cross-linking points, SBS and SIS (having a conjugated diene-based polymer block in which a soft segment has not been hydrogenated) and an epoxidated product of styrene-butadiene-styrene block copolymer are preferably used.

Examples of the polyethylene species include low-density polyethylene (LDPE), high-density polyethylene (HDPE), and linear low-density polyethylene (LLDPE). The C5-type resin is a solid polymer (C5-type synthetic petroleum resin) obtained through polymerization of a C5 fraction in the presence of a Friedel-Crafts catalyst (e.g., AlCl₃ or BF₃). Specific examples of the C5-type resin include copolymers mainly formed from isoprene, cyclopentadiene, 1,3-pentadiene, 1-pentene, etc., 2-pentene-dicyclopentadiene copolymer, and a polymer mainly formed from 1,3-pentadiene.

The C9-type resin is a solid polymer (C9-type synthetic petroleum resin) obtained through polymerization of a C9 fraction in the presence of a Friedel-Crafts catalyst (e.g., AlCl₃ or BF₃). Specific examples of the C9-type resin include copolymers mainly formed from indene, methylindene, vinyltoluene, etc. The C5/C9-type resin is a solid polymer (C5/C9-type synthetic petroleum resin) obtained through polymerization of C5 to C9 fractions in the presence of a Friedel-Crafts catalyst (e.g., AlCl₃ or BF₃). Specific examples of the C5/C9-type resin include copolymers mainly formed from, for example, vinyltoluene and indene. From the viewpoint of compatibility with rubber components, the C5/C9-type resin preferably has low C≥9 component content. Specifically, the C5/C9 resin preferably has an amount of C≥9 components in the total amount of the resin less than 50 mass%, more preferably 40 mass% or less.

The dicyclopentadiene-based resin is a petroleum resin obtained mainly from dicyclopentadiene present in a C5 fraction. Specific examples of the dicyclopentadiene-based resin include "Markarez M" series (M-890A, M-845A, M-990A, etc.) (products of Marzen Petrochemical Co., Ltd.). Examples of the alkylphenolic resin include alkylphenol acetylene resin such as p-tert-butylphenol acetylene resin; and alkylphenol-formaldehyde resin of low polymerization degree.

The terpene resin is a solid resin prepared by polymerizing turpentine (recovered in production of rosin from pine trees) or a polymerization component isolated therefrom in the presence of a Friedel-Crafts catalyst, and examples thereof include β-pinene resin and α-pinene resin. Commercial products of the terpene resin may also be used. Examples thereof include "YS Resin" series (PX-1250, TR-105, etc.) (products of Yasuhara Chemical Co., Ltd.) and "Piccolyte" series (A115, S115, etc.) (products of Hercules).

A typical example of the terpene-aromatic compound resin is a terpene-phenolic resin. The terpene-phenolic resin may be prepared by a process reacting a terpene with various phenols in the presence of a Friedel-Crafts catalyst, or such a process further concomitant with condensation with formalin. No particular limitation is imposed on the raw material terpene, and monoterpene hydrocarbons such as α-pinene and limonene are preferred. A monoterpene hydrocarbon including α-pinene is more preferred, with pure α-pinene being particularly preferred. In the present disclosure, a terpene-phenolic resin having low phenolic content is preferred. The term "low phenol content" refers to the phenolic content of the total amount of the resin being less than 50 mass%, preferably 40 mass% or less. When a terpene-aromatic compound resin, in particular, a terpene-phenolic resin, is used as resin [E], handling performance can also be enhanced. Commercial products of the terpene-aromatic compound resin may be used. Examples of commercial products include "Tamanol 803L" and "Tamanol 901" (products of Arakawa Chemical Industries, Ltd.) and "YS Polyster (registered trademark)" series (products of Yasuhara Chemical Co., Ltd.).

The amount of resin [E] to be incorporated is preferably 1 part by mass or more, with respect to 100 parts by mass of the rubber component(s) contained in the polymer composition. Use of resin [E] in an amount of 1 part by mass or more is suitable, since the effect of improving the wear resistance, breaking strength, and anti-crack-propagation property of the cross-linked product obtained from the polymer composition can be satisfactorily enhanced. The amount of resin [E] is more preferably 3 parts by mass or more, still more preferably 7 parts by mass or more, with respect to 100 parts by mass of the rubber component(s). From the viewpoint of maintaining characteristics of the rubber composition at suitable levels, the amount of resin [E] is preferably 50 parts by mass or less, more preferably 30 parts by mass or less, still more preferably 25 parts by mass or less, with respect to 100 parts by mass of the rubber component(s) contained in the polymer composition. These resins [E] may be used singly or in combination of two or more species.

### [F] Silane coupling agent

In the present disclosure, a silane coupling agent may be added, to thereby further enhance dispersibility of silica. No particular limitation is imposed on the silane coupling agent to be used, but a sulfur-containing silane coupling agent is preferred. Examples of the sulfur-containing silane coupling agent include bis(3-triethoxysilylpropyl) tetrasulfide, bis(3-triethoxysilylpropyl) disulfide, 3-trimethoxysilylpropylbenzothiazole tetrasulfide, γ-mercaptopropyltriethoxysilane, and 3-octanoylthiopropyltirethoxysilane.

The amount of the silane coupling agent to be used is preferably 1 to 20 parts by mass, with respect to 100 mass of silica. When the amount of the silane coupling agent is less than 1 part by mass, sufficient enhancement dispersibility of silica may fail to attain due to an excessively small amount. In contrast, when the amount is in excess of 20 parts by mass, processability and elongation at break may be impaired in some cases. The amount of the silane coupling agent is more preferably 5 to 15 parts by mass, with respect to 100 parts by mass of silica.

### [G] Cross-linking agent

The polymer composition of the present disclosure may contain a cross-linking agent [G]. By virtue of the cross-linking agent [G] contained in the polymer composition of the present disclosure, a cross-linked product having an improved mechanical strength and wear resistance can be yielded. Examples of the cross-linking agent include sulfur, sulfur halide, an organic peroxide, a quinone dioxime, an organic polyvalent amine compound, and an alkylphenol resin having a methylol group. Among them, sulfur is generally used. The amount of cross-linking agent incorporated into the polymer composition is preferably 0.1 to 5 parts by mass with respect to 100 parts by mass of the total rubber component(s) in the composition, more preferably 0.5 to 3 parts by mass.

Into the polymer composition, a process oil which is generally used for oil-extending an elastomer may be incorporated as an extender oil. The process oil is incorporated into a polymer composition through, for example direct addition thereof during blending of rubber. Various oils known in the art are preferably used as a process oil, and examples of the process oil include aromatic oil, paraffin-based oil, naphthene-based oil, and vegetable oil and, further oils having low polycyclic aromatic compound content (i.e., low-PCA oils) such as a mild extraction solvate (MES), a treated distillate aromatic extract (TDAE), and a special residual aromatic extract (SRAE); and heavy naphthene-based oil. Examples of commercial products of MES, TDAE, and SRAE include Catenex SNR (heavy paraffin obtained by dewaxing a distillate with solvent) (product of Shell) as MES; Vivatec 500 (product of H&R Wasag AG) as TDAE; and NC140 (product of Japan Energy Corp.) as SRAE. The amount of process oil is preferably 10 to 100 parts by mass, with respect to the total amount of polymer components contained in the polymer composition as 100 parts by mass.

In addition to the aforementioned components, various additives generally employed in polymer compositions for producing rubber for tires may be incorporated into the polymer composition. Examples of such additives include an antioxidant, zinc flower, stearic acid, a softening agent, a vulcanization accelerator, a silane coupling agent, a compatibilizer, a vulcanization aid, a processing aid, and an anti-scorching agent. The amount of each additive may be appropriately determined, so long as the effects of the present disclosure are not impaired.

The polymer composition of the present disclosure can be applied, as a cross-linked product, to various rubber products, by kneading polymer components, fillers and optional components by means of a kneader such as an open-type kneader (e.g., a roller) or a close-type kneader (e.g., a Banbury mixer); molding; and cross-linking (vulcanizing). More specifically, the cross-linked product of the present disclosure can be applied to, for example, tire parts such as tire tread, under tread, carcass, sidewall, and bead; sealing materials such as packings, gaskets, weather strips, and O-rings; exterior/interior coating materials for vehicles including automobiles, marine vessels, aircraft, and trains; building materials; vibration-proof rubbers for industrial machines, facilities, etc.; hoses and hose covers such as diaphragms, rollers, radiator hoses, and air hoses; belts such as power-transmission belt; linings; dust boots; materials of medical apparatus; fenders; electric wire insulating materials; and other industrial products.

According to the method for producing the modified conjugated diene-based polymer of the present disclosure, a modified conjugated diene-based polymer for obtaining a cross-linked product can be obtained, wherein the product exhibits excellent physical properties required for tires (e.g., low fuel consumption performance and strength). Thus, the polymer composition containing modified conjugated diene-based polymer [A] obtained in the present disclosure can be suitably used as a material particularly for forming treads or sidewalls of tires or both.

Production of tires may be carried out through any customary method. In one procedure, the polymer composition is kneaded by means of a kneader, and the kneaded product is formed into a sheet, which is placed at a predetermined position (e.g., outside the carcass in the case of sidewall) through a customary method, followed by performing vulcanization molding. As a result, treads or sidewalls are formed, to thereby yield a pneumatic tire.

The present disclosure, which has been described in detail hereinabove, provides the following means.
[Means 1] A method for producing a modified conjugated diene-based polymer, the method including a step of polymerizing a monomer including a conjugated diene compound in the presence of a polymerization initiator; wherein the polymerization initiator includes a silicon-containing initiator having an alkali metal element or an alkaline earth metal element and the aforementioned group F2.
[Means 2] The method for producing the modified conjugated diene-based polymer as described in [Means 1], wherein the silicon-containing initiator further has at least one group selected from the group consisting of a tertiary amino group and a protected secondary amino group.
[Means 3] The method for producing the modified conjugated diene-based polymer as described in [Means 1] or [Means 2], wherein the silicon-containing initiator is a compound produced by mixing a metal compound which is at least one selected from the group consisting of an alkali metal compound and an alkaline earth metal compound with a compound [M] having the group F2.
[Means 4] The method for producing the modified conjugated diene-based polymer as described in [Means 3], wherein the compound [M] has at least one member selected from the group consisting of a monovalent cyclic group having a structure in which a halogen atom or a methyl group is bound to an aromatic ring, a secondary amino group, and a haloalkyl group.
[Means 5] The method for producing the modified conjugated diene-based polymer as described in [Means 3] or [Means 4], wherein the compound [M] is a compound represented by the aforementioned formula (1).
[Means 6] The method for producing the modified conjugated diene-based polymer as described in any of [Means 3] to [Means 5], wherein the silicon-containing initiator which has been prepared by mixing the metal compound with the compound [M] in advance is mixed with the monomer.
[Means 7] The method for producing the modified conjugated diene-based polymer as described in any of [Means 3] to [Means 5], wherein the silicon-containing initiator is formed by mixing the compound [M] with the metal compound in a reactor where the monomer is present.
[Means 8] The method for producing the modified conjugated diene-based polymer as described in [Means 7], wherein a vinyl content-modifying agent, which is a compound having at least one element of oxygen and nitrogen and not having any of active hydrogen, an alkali metal element, and an alkaline earth metal element, is added to the reactor after addition of the metal compound to the reactor.
[Means 9] The method for producing the modified conjugated diene-based polymer as described in any of [Means 1] to [Means 8], which method further includes a step of adding the silicon-containing initiator to the reactor after start of polymerization of the monomer.
[Means 10] A modified conjugated diene-based polymer represented by the aforementioned formula (3).
[Means 11] A polymer composition containing the modified conjugated diene-based polymer produced through a production method as described in any of [Means 1] to [Means 9] or the modified conjugated diene-based polymer as described in [Means 10], and at least one species selected from the group consisting of silica and carbon black.
[Means 12] A cross-linked product formed by cross-linking of the polymer composition as described in [Means 11].
[Means 13] A tire having a tread and a sidewall, wherein one or both of them is formed by use of the polymer composition as described in [Means 11].

### Examples

The present disclosure will next be described in detail by way of examples, which should not be construed as limiting the disclosure thereto. Unless otherwise specified, "part(s)" and "%" in the Examples and Comparative Examples are on a mass basis. Physical properties of each polymer were measured through the following methods.

### [Characteristic evaluation of polymer and rubber]

·Vinyl bond content (mol%): Determined through 400 MHz ¹H-NMR.
·Bonded styrene content (mass%): Determined through 400 MHz ¹H-NMR.
·Weight average molecular weight (Mw): Determined from a molecular weight (in terms of polystyrene) chart obtained through gel permeation chromatography (GPC). Specific GPC measurement conditions are as follows.
(GPC measurement conditions)
   Apparatus: HLC-8020 (product of Tosoh Corporation)
   Column: GMH-HR-H (product of Tosoh Corporation). Two columns were connected in series.
   Detector: Differential refractometer RI-8020 (product of Tosoh Corporation)
   Eluent: Tetrahydrofuran
   Column temperature: 40°C
   Flow rate: 1.0 mL/min
   Sample concentration: 10 mg/20mL

The molecular weight of each polymer was determined by use of a corresponding sample after termination of polymerization reaction. The "1st peak weight average molecular weight" refers to a peak top molecular weight at the lowest molecular weight.
·Mooney viscosity (ML₁₊₄, 100°C) : Measured in accordance with JIS K6300-1: 2013, by means of an L rotor under the specific conditions (preliminary heating: 1 minute, rotor operation time: 4 minutes, and temperature: 100°C).

### <Synthesis of compound [M]>

### [Synthesis Example 1: Synthesis of N-(3-(tert-butoxydimethylsilyl)propyl)piperazine (compound M-7)]

To a two-neck flask (capacity: 300 mL) with a nitrogen atmosphere, chloro(3-chloropropyl)dimethylsilane (10.5 g) and dichloromethane (180 mL) were added. The temperature of the contents of the reactor was adjusted to 0°C, and a mixture of tert-butyl alcohol (8.7 g) and N-methylimidazole (5.3 g) was added dropwise thereto slowly. After dropwise addition, the mixture was stirred for 2 hours, while the temperature of the reactor was maintained at 0°C. Subsequently, the reaction mixture was filtered, to thereby remove N-methylimidazolium hydrochloride. Dichloromethane present in the filtrate was distilled out by means of a rotary evaporator, to thereby yield 12.0 g of tert-butoxy(3-chloropropyl)dimethylsilane at a yield of 93%.

Subsequently, piperazine (14.9 g), diisopropylethylamine (7.5 g), tert-butoxy(3-chloropropyl)dimethylsilane (12.0 g), and toluene (55 mL) were added to a round-bottom flask (capacity: 100 mL) with a nitrogen atmosphere. The reactor was heated to a reflux state with toluene, and stirring was continued for 5.5 hours. Thereafter, the reactor was cooled in a refrigerator for 16 hours, and the resultant reaction mixture was filtered. By means of a rotary evaporator, low-boiling-point components contained in the filtrate was distilled out, and distillation was conducted under reduced pressure, to thereby yield 2.9 g of the target compound M-7 at an yield of 19%.

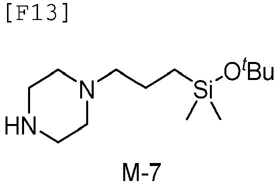

### <Synthesis of modified conjugated diene-based polymer>

### [Example 1: Synthesis and physical properties of modified conjugated diene-based polymer A-1]

To an autoclave reactor (capacity: 5 L) with a nitrogen atmosphere, cyclohexane (2,000 g), N-(3-(tert-butoxydimethylsilyl)propyl)piperazine (compound M-7) (2.64 mmol), 2,2-di(tetrahydrofuryl)propane (0.25 g) serving as a vinyl content-modifying agent (i.e., a randomizer), and styrene (80 g) and 1,3-butadiene (300 g) serving as monomers were added. The temperature of the contents of the reactor was adjusted to 20°C, and then n-butyllithium (3.12 mmol) was added thereto, to thereby initiate polymerization. Polymerization was performed under adiabatic conditions, and the temperature rose up to 71°C.

When the polymerization conversion was confirmed to be 99% (i.e., 35 minutes after start of polymerization), 1,3-butadiene (20 g) was further added over 1 minute (additional butadiene). To the thus-obtained polymer solution, 2,6-di-tert-butyl-p-cresol (3.52 g) serving as an antioxidant was added. Thereafter, the polymer solution was subjected to steam stripping for removal of the solvent, and the resultant matter was dried by means of a heat roller whose temperature was controlled at 130°C, to thereby yield a modified conjugated diene-based polymer (hereinafter may also be referred as a "polymer A-1"). Table 2 shows properties including physical properties of the polymer A-1.

### [Example 2: Synthesis and physical properties of modified conjugated diene-based polymer A-2]

The procedure of Example 1 was repeated, except that 1-(piperidin-4-yl)-3-(N,N-diethylaminodimethylsilyl)propane (compound M-9) (2.64 mmol) was used instead of N-(3-(tert-butoxydimethylsilyl)propyl)piperazine (compound M-7), to thereby yield a modified conjugated diene-based polymer (hereinafter may also be referred to as a "polymer A-2"). Table 2 shows properties including physical properties of the polymer A-2.

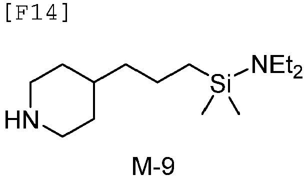

### [Example 3: Synthesis and physical properties of modified conjugated diene-based polymer A-3]

To an autoclave reactor (capacity: 5 L) with a nitrogen atmosphere, cyclohexane (2,000 g), N-(3-(tert-butoxydimethylsilyl)propyl)piperazine (compound M-7) (2.64 mmol), 2,2-di(tetrahydrofuryl)propane (0.25 g) serving as a vinyl content-modifying agent (i.e., a randomizer), and styrene (80 g) and 1,3-butadiene (300 g) serving as monomers were added. The temperature of the contents of the reactor was adjusted to 20°C, and then n-butyllithium (3.12 mmol) serving as a polymerization initiator was added thereto, to thereby initiate polymerization. Polymerization was performed under adiabatic conditions, and the temperature rose up to 74°C.

When the polymerization conversion was confirmed to be 99% (i.e., 41 minutes after start of polymerization), 1,3-butadiene (20 g) was further added over 1 minute. Subsequently, silicon tetrachloride (0.78 mmol) was added. To the thus-obtained polymer solution, 2,6-di-tert-butyl-p-cresol (3.52 g) serving as an antioxidant was added. Thereafter, the polymer solution was subjected to steam stripping for removal of the solvent, and the resultant matter was dried by means of a heat roller whose temperature was controlled at 130°C, to thereby yield a modified conjugated diene-based polymer (hereinafter may also be referred as a "polymer A-3"). Table 2 shows properties including physical properties of the polymer A-3.

### [Example 4: Synthesis and physical properties of modified conjugated diene-based polymer A-4]

The procedure of Example 3 was repeated, except that tin tetrachloride (0.78 mmol) was used instead of silicon tetrachloride, to thereby yield a modified conjugated diene-based polymer (hereinafter may also be referred to as a "polymer A-4"). Table 2 shows properties including physical properties of the polymer A-4.

### [Example 5: Synthesis and physical properties of modified conjugated diene-based polymer A-5]

The procedure of Example 1 was repeated, except that divinyl benzene (0.02 g) was further added as a monomer, to thereby yield a modified conjugated diene-based polymer (hereinafter may also be referred to as a "polymer A-5"). Table 2 shows properties including physical properties of the polymer A-5.

### [Example 6: Synthesis and physical properties of modified conjugated diene-based polymer A-6]

The procedure of Example 1 was repeated, except that the amounts of butadiene, styrene, and additional butadiene fed to the reactor were changed to 400 g, 0 g, and 0 g, respectively, to thereby yield a modified conjugated diene-based polymer (hereinafter may also be referred to as a "polymer A-6"). Table 2 shows properties including physical properties of modified conjugated diene-based polymer A-6.

### [Example 7: Synthesis and physical properties of modified conjugated diene-based polymer A-7]

To an autoclave reactor (capacity: 5 L) with a nitrogen atmosphere, cyclohexane (2,000 g), N-(3-(tert-butoxydimethylsilyl)propyl)piperazine (compound M-7) (2.64 mmol), and styrene (80 g) and 1,3-butadiene (300 g) serving as monomers were added. The temperature of the contents of the reactor was adjusted to 20°C, and then n-butyllithium (3.12 mmol) was added thereto. Thereafter, 2,2-di(tetrahydrofuryl)propane (0.25 g) serving as a vinyl content-modifying agent (i.e., a randomizer) was added. Polymerization was performed under adiabatic conditions, and the temperature rose up to 73°C.

When the polymerization conversion was confirmed to be 99% (i.e., 36 minutes after start of polymerization), 1,3-butadiene (20 g) was further added over 1 minute. To the thus-obtained polymer solution, 2,6-di-tert-butyl-p-cresol (3.52 g) serving as an antioxidant was added. Thereafter, the polymer solution was subjected to steam stripping for removal of the solvent, and the resultant matter was dried by means of a heat roller whose temperature was controlled at 130°C, to thereby yield a modified conjugated diene-based copolymer (hereinafter may also be referred as a "polymer A-7"). Table 2 shows properties including physical properties of the polymer A-7.

### [Example 8: Synthesis and physical properties of modified conjugated diene-based polymer A-8]

The procedure of Example 7 was repeated, except that N-(3-(triethoxysilyl)propyl)piperazine (compound M-2) (2.64 mmol) was used instead of N-(3-(tert-butoxydimethylsilyl)propyl)piperazine (compound M-7), and the amount of n-butyllithium added was changed to 9.36 mmol, to thereby yield a modified conjugated diene-based polymer (hereinafter may also be referred to as a "polymer A-8"). Table 2 shows properties including physical properties of the polymer A-8.

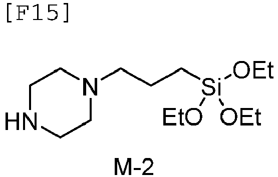

### [Example 9: Synthesis and physical properties of modified conjugated diene-based polymer A-9] (1) Synthesis of polymerization initiator

To a flask (capacity: 500 mL) with a nitrogen atmosphere, cyclohexane (312 g) and then N-(3-(tert-butoxydimethylsilyl)propyl)piperazine (compound M-7) (4.00 mmol) were added, and the compound M-7 was dissolved. To the solution, n-butyllithium (4.00 mmol) was added, and the contents were caused to react at room temperature for 60 minutes, to thereby yield an initiator solution I-1.

### (2) Synthesis of polymer

To an autoclave reactor (capacity: 5 L) with a nitrogen atmosphere, cyclohexane (1,760 g), 2,2-di(tetrahydrofuryl)propane (0.25 g) serving as a vinyl content-modifying agent (i.e., a randomizer), and styrene (80 g) and 1,3-butadiene (300 g) serving as monomers were added. The temperature of the contents of the reactor was adjusted to 20°C, and then the above initiator solution I-1 was added so as to adjust the amount of a polymerization initiator (i.e., a lithiated product of compound M-7) to 3.12 mmol, to thereby initiate polymerization. Polymerization was performed under adiabatic conditions, and the temperature rose up to 72°C.

When the polymerization conversion was confirmed to be 99% (i.e., 48 minutes after start of polymerization), 1,3-butadiene (20 g) was further added over 1 minute. To the polymer solution containing the formed modified conjugated diene-based polymer, 2,6-di-tert-butyl-p-cresol (3.52 g) serving as an antioxidant was added. Thereafter, the polymer solution was subjected to steam stripping for removal of the solvent, and the resultant matter was dried by means of a heat roller whose temperature was controlled at 130°C, to thereby yield a modified conjugated diene-based copolymer (hereinafter may also be referred as a "polymer A-9"). Table 2 shows properties including physical properties of the polymer A-9.

### [Example 10: Synthesis and physical properties of modified conjugated diene-based polymer A-10]

### (1) Synthesis of polymerization initiator

To a flask (capacity: 500 mL) with a nitrogen atmosphere, cyclohexane (250 g) and then N-(3-(tert-butoxydimethylsilyl)propyl)piperazine (compound M-7) (3.20 mmol) were added, and the compound M-7 was dissolved. To the solution, n-butyllithium (3.20 mmol) was added, and the contents were caused to react at room temperature for 60 minutes. Subsequently, isoprene (2.18 g) was added thereto, and the contents were further reacted at 40°C for 30 minutes, to thereby yield an initiator solution 1-2.

### (2) Synthesis of polymer

To an autoclave reactor (capacity: 5 L) with a nitrogen atmosphere, cyclohexane (1,750 g), 2,2-di(tetrahydrofuryl)propane (0.25 g) serving as a vinyl content-modifying agent (i.e., a randomizer), and styrene (80 g) and 1,3-butadiene (300 g) serving as monomers were added. The temperature of the contents of the reactor was adjusted to 20°C, and then the entire amount of the above initiator solution 1-2 was added, to thereby initiate polymerization. Polymerization was performed under adiabatic conditions, and the temperature rose up to 76°C.

When the polymerization conversion was confirmed to be 99% (i.e., 43 minutes after start of polymerization), 1,3-butadiene (20 g) was further added over 1 minute. To the thus-obtained polymer solution, 2,6-di-tert-butyl-p-cresol (3.52 g) serving as an antioxidant was added. Thereafter, the polymer solution was subjected to steam stripping for removal of the solvent, and the resultant matter was dried by means of a heat roller whose temperature was controlled at 130°C, to thereby yield a modified conjugated diene-based copolymer (hereinafter may also be referred as a "polymer A-10"). Table 2 shows properties including physical properties of the polymer A-10.

### [Example 11: Synthesis and physical properties of modified conjugated diene-based polymer A-11]

### (1) Synthesis of polymerization initiator

To a flask (capacity: 500 mL) with a nitrogen atmosphere, cyclohexane (312 g) and then 1-(4-bromophenyl)-4-(3-ethoxydimethylsilyl)propyl)piperazine (compound M-14) (4.00 mmol) and tetramethylethylenediamine (0.092 g) were added, and the compounds were dissolved. To the solution, n-butyllithium (4.00 mmol) was added, and the contents were caused to react at 20°C for 60 minutes, to thereby yield an initiator solution 1-3.

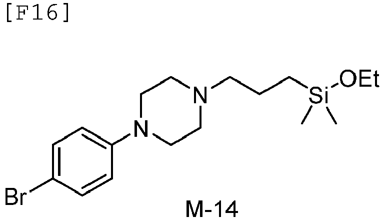

### (2) Synthesis of polymer

To an autoclave reactor (capacity: 5 L) with a nitrogen atmosphere, cyclohexane (1,760 g), 2,2-di(tetrahydrofuryl)propane (0.25 g) serving as a vinyl content-modifying agent (i.e., a randomizer), and styrene (80 g) and 1,3-butadiene (300 g) serving as monomers were added. The temperature of the contents of the reactor was adjusted to 20°C, and then the above initiator solution 1-3 was added so as to adjust the amount of a polymerization initiator (i.e., a lithiated product of compound M-14) to 3.12 mmol, to thereby initiate polymerization. Polymerization was performed under adiabatic conditions, and the temperature rose up to 72°C.

When the polymerization conversion was confirmed to be 99% (i.e., 48 minutes after start of polymerization), 1,3-butadiene (20 g) was further added over 1 minute. To the thus-obtained polymer solution, 2,6-di-tert-butyl-p-cresol (3.52 g) serving as an antioxidant was added. Thereafter, the polymer solution was subjected to steam stripping for removal of the solvent, and the resultant matter was dried by means of a heat roller whose temperature was controlled at 130°C, to thereby yield a modified conjugated diene-based copolymer (hereinafter may also be referred as a "polymer A-11"). Table 2 shows properties including physical properties of the polymer A-11.

### [Example 12: Synthesis and physical properties of modified conjugated diene-based polymer A-12] (1) Synthesis of polymerization initiator

The same procedure as employed in Example 9 was repeated, to thereby prepare an initiator solution I-1.

### (2) Synthesis of polymer

To an autoclave reactor (capacity: 5 L) with a nitrogen atmosphere, cyclohexane (1,760 g), 2,2-di(tetrahydrofuryl)propane (0.25 g) serving as a vinyl content-modifying agent (i.e., a randomizer), and styrene (80 g) and 1,3-butadiene (300 g) serving as monomers were added. The temperature of the contents of the reactor was adjusted to 20°C, and then the above initiator solution I-1 was added so as to adjust the amount of a polymerization initiator (i.e., a lithiated product of compound M-7) to 2.42 mmol, to thereby initiate polymerization. Polymerization was performed under adiabatic conditions, and the temperature rose up to 72°C. When the polymerization conversion was confirmed to be 80% (i.e., 42 minutes after start of polymerization), the initiator solution I-1 was further added in an amount corresponding to an amount of a lithiated product of compound M-7 of 0.70 mmol.

When the polymerization conversion was confirmed to be 99% (i.e., 48 minutes after start of polymerization), 1,3-butadiene (20 g) was further added over 1 minute. To the thus-obtained polymer solution, 2,6-di-tert-butyl-p-cresol (3.52 g) serving as an antioxidant was added. Thereafter, the polymer solution was subjected to steam stripping for removal of the solvent, and the resultant matter was dried by means of a heat roller whose temperature was controlled at 130°C, to thereby yield a modified conjugated diene-based copolymer (hereinafter may also be referred as a "polymer A-12"). Table 2 shows properties including physical properties of the polymer A-12.

### [Comparative Example 1: Synthesis and physical properties of modified conjugated diene-based polymer B-1]

To an autoclave reactor (capacity: 5 L) with a nitrogen atmosphere, cyclohexane (2,000 g), 2,2-di(tetrahydrofuryl)propane (0.25 g) serving as a vinyl content-modifying agent (i.e., a randomizer), and styrene (80 g) and 1,3-butadiene (300 g) serving as monomers were added. The temperature of the contents of the reactor was adjusted to 20°C, and then n-butyllithium (3.12 mmol) serving as a polymerization initiator was added thereto, to thereby initiate polymerization. Polymerization was performed under adiabatic conditions, and the temperature rose up to 72°C.

When the polymerization conversion was confirmed to be 99% (i.e., 38 minutes after start of polymerization), 1,3-butadiene (20 g) was further added over 1 minute. Subsequently, 3-(N,N-bistrimethylsilyl)aminopropylmethyldiethoxysilane (compound Mod-1) (1.1 g) was further added. To the thus-obtained polymer solution, 2,6-di-tert-butyl-p-cresol (3.52 g) serving as an antioxidant was added. Thereafter, the polymer solution was subjected to steam stripping for removal of the solvent, and the resultant matter was dried by means of a heat roller whose temperature was controlled at 130°C, to thereby yield a modified conjugated diene-based copolymer (hereinafter may also be referred as a "polymer B-1"). Table 2 shows properties including physical properties of the polymer B-1.

### [Comparative Example 2: Synthesis and physical properties of modified conjugated diene-based polymer B-2]

The procedure of Example 1 was repeated, except that N-(tert-butyldimethylsilyl)piperazine (compound Mod-2) (2.64 mmol) was used instead of N-(3-(tert-butoxydimethylsilyl)propyl)piperazine (compound M-7), to thereby yield a modified conjugated diene-based polymer (hereinafter may also be referred to as a "polymer B-2"). Table 2 shows properties including physical properties of the polymer B-2.

**[Table 1]**

| | | Example 1 | Example 2 | Example 3 | Example 4 | Example 5 | Example 6 | Example 7 | Example 8 | Example 9 | Example 10 | Example 11 | Example 12 | Comparative Example 1 | Com parative Example 2 |
|---|---|---|---|---|---|---|---|---|---|---|---|---|---|---|---|
| modified conjugated diene-based polymer | | A-1 | A-2 | A-3 | A-4 | A-5 | A-6 | A-7 | A-8 | A-9 | A-10 | A-11 | A-12 | B-1 | B-2 |
| Formulation employed in polymerization solvent | | | | | | | | | | | | | | | |
| : cyclohexane vinyl content-modifying agent | (g) | 2000 | 2000 | 2000 | 2000 | 2000 | 2000 | 2000 | 2000 | 1760 | 1750 | 2000 | 2000 | 2000 | 2000 |
| : R-1 monomer | (g) | 0.25 | 0.25 | 0.25 | 0.25 | 0.25 | 0.25 | 0.25 | 0.25 | 0.25 | 0.25 | 0.25 | 0.25 | 0.21 | 0.25 |
| : styrene | (g) | 80 | 80 | 80 | 80 | 80 | 0 | 80 | 80 | 80 | 80 | 80 | 80 | 80 | 80 |
| : butadiene | (g) | 300 | 300 | 300 | 300 | 300 | 400 | 300 | 300 | 300 | 300 | 300 | 300 | 300 | 300 |
| : additional butadiene | (g) | 20 | 20 | 20 | 20 | 20 | 0 | 20 | 20 | 20 | 20 | 20 | 20 | 20 | 20 |
| : isoprene | (g) | - | - | - | - | - | - | - | - | - | 2.18 | - | - | - | - |
| : divinylbenzene polymerization initiator | (g) | - | - | - | - | 0.02 | - | - | - | - | - | - | - | - | - |
| : n-butyllithium | (mmol) | 3.12 | 3.12 | 3.12 | 3.12 | 3.12 | 3.12 | 3.12 | 9.36 | - | - | - | - | 3.12 | 3.12 |
| : type of initiation end-modifying agent | | M-7 | M-9 | M-7 | M-7 | M-7 | M-7 | M-7 | M-2 | I-1 (M-7) | I-2 (M-7) | I-3 (M-14) | I-1 (M-7) | - | Mod-2 |
| : additive amount | (mmol) | 2.64 | 2.64 | 2.64 | 2.64 | 2.64 | 2.64 | 2.64 | 2.64 | 3.12 | 3.20 | 3.12 | 2.42 | - | 2.64 |
| | | | | | | | | | | | | | 0.70 | | |
| end-modifying agent or coupling agent | | | | | | | | | | | | | | | |
| : type | | - | - | SiCl₄ | SnCl₄ | - | - | - | - | - | - | - | - | Mod-1 | - |
| : additive amount | (mmol) | - | - | 0.78 | 0.78 | - | - | - | - | - | - | - | - | 3.12 | - |

Abbreviations of the compounds in Table 1 are as follows.
·R-1: 2,2-ditetrahydrofurylpropane
·M-2: N-(3-(triethoxysilyl)propyl)piperazine
·M-7: N-(3-(tert-butoxydimethylsilyl)propyl)piperazine
·M-9: 1-(piperidin-4-yl)-3-(N,N-diethylaminodimethylsilyl)propane
·M-14: 1-(4-bromophenyl)-4-(3-ethoxydimethylsilyl)propyl)piperazine
·Mod-1: 3-(N,N-bistrimethylsilyl)aminopropylmethyldiethoxysilane
·Mod-2: N-(tert-butyldimethylsilyl)piperazine

In Examples 9 to 12, n-butyllithium and the compound [M] were mixed in cyclohexane, to thereby prepare an initiator solution, and the thus-obtained initiator solution was added to a mixture of a monomer and a randomizer in cyclohexane, to thereby perform polymerization. In Example 12, the initiator solution was added in a divided manner (twice). In Table 1, in the case of Example 12, the upper column of the amount of polymerization initiator added corresponds to the amount of the first addition, and the lower column corresponds to the amount of the second addition.

**[Table 2]**

| | Example 1 | Example 2 | Example 3 | Example 4 | Example 5 | Example 6 | Example 7 | Example 8 | Example 9 | Example 10 | Example 11 | Example 12 | Com parative Example 1 | Comparative Example 2 |
|---|---|---|---|---|---|---|---|---|---|---|---|---|---|---|
| modified conjugated diene-based polymer | A-1 | A-2 | A-3 | A-4 | A-5 | A-6 | A-7 | A-8 | A-9 | A-10 | A-11 | A-12 | B-1 | B-2 |
| bonded styrene content (wt%) | 22 | 22 | 18 | 22 | 22 | 19 | 0 | 21 | 19 | 20 | 20 | 21 | 18 | 21 |
| vinyl bond content (mol%) | 67 | 55 | 58 | 59 | 60 | 64 | 56 | 65 | 65 | 61 | 58 | 57 | 62 | 65 |
| 1st peak weight average molecular weight [*10⁴] | 34 | 25 | 31 | 29 | 27 | 31 | 30 | 30 | 31 | 30 | 34 | 48 | 31 | 30 |
| total weight average molecular weight [*10⁴] | 37 | 31 | 84 | 81 | 32 | 32 | 31 | 31 | 32 | 32 | 37 | 35 | 33 | 30 |
| mooney viscosity (ML₁₊₄) | 17 | 16 | 72 | 71 | 15 | 18 | 17 | 17 | 17 | 18 | 19 | 18 | 19 | 16 |

### <Production of polymer compositions and cross-linked products>

Each of the modified conjugated diene-based polymers A-1 to A-12, B-1, and B-2 obtained in the above production processes was mixed with components at formulations shown in Table 3, and the mixture was kneaded, to thereby provide a polymer composition. The values of formulations in Table 3 are on the mass basis. The kneading procedure is as follows. Specifically, a first kneading step was performed by means of a plastomill (capacity: 250 mL) equipped with a temperature controller. In the first kneading step, each of the modified conjugated diene-based polymers, butadiene rubber, silica, a silane coupling agent, an extender oil, stearic acid, an antioxidant, and zinc oxide were kneaded at a filling ratio of 72% and a rotation speed of 60 rpm. Next, a second kneading step was performed. Specifically, the above obtained mixture was cooled to room temperature, and sulfur and a vulcanization accelerator were added thereto. The resultant mixture was kneaded, to thereby provide a polymer composition. The thus-obtained polymer composition was molded and vulcanized by means of a vulcanization press machine at 160°C for a predetermined time, to thereby provide a cross-linked product (vulcanized rubber). Rolling resistance of the rubber sample was assessed through the following procedures. Table 3 shows the results

Rolling resistance (50°C tanδ): The rolling resistance of a vulcanized rubber sample was measured by means of ARES-RDA (product of TA Instruments) at a shear strain of 1.0%, an angular speed of 100 rad/s, and 50°C, to thereby determine a loss tangent (tanδ (50°C)). The measurement was represented by an index with respect to that of Comparative Example 1 as 100. The higher the index, the smaller the energy loss (favorable rolling resistance (low fuel consumption performance)).

**[Table 3]**

| Formulation | Example 1 | Exam ple 2 | Example 3 | Example 4 | Example 5 | Example 6 | Example 7 | Example 8 | Exam ple 9 | Example 10 | Example 11 | Example 12 | Comparative Example 1 | Com parative Example 2 |
|---|---|---|---|---|---|---|---|---|---|---|---|---|---|---|
| modified conjugated diene-based polymer | A-1 (70) | A-2 (70) | A-3 (70) | A-4 (70) | A-5 (70) | A-6 (70) | A-7 (70) | A-8 (70) | A-9 (70) | A-10 (70) | A-11 (70) | A-12 (70) | B-1 (70) | B-2 (70) |
| butadiene rubber *1) | 30 | 30 | 30 | 30 | 30 | 30 | 30 | 30 | 30 | 30 | 30 | 30 | 30 | 30 |
| silica *2) | 70 | 70 | 70 | 70 | 70 | 70 | 70 | 70 | 70 | 70 | 70 | 70 | 70 | 70 |
| silane coupling agent *3) | 56 | 56 | 56 | 56 | 56 | 56 | 56 | 56 | 56 | 56 | 56 | 56 | 5.6 | 56 |
| extender oil *4) | 30 | 30 | 30 | 30 | 30 | 30 | 30 | 30 | 30 | 30 | 30 | 30 | 30 | 30 |
| stearic acid *5) | 2 | 2 | 2 | 2 | 2 | 2 | 2 | 2 | 2 | 2 | 2 | 2 | 2 | 2 |
| zinc oxide *6) | 3 | 3 | 3 | 3 | 3 | 3 | 3 | 3 | 3 | 3 | 3 | 3 | 3 | 3 |
| antioxidant *7) | 1 | 1 | 1 | 1 | 1 | 1 | 1 | 1 | 1 | 1 | 1 | 1 | 1 | 1 |
| vulcanization accelerator D *8) | 1.5 | 1.5 | 1.5 | 1.5 | 1.5 | 1.5 | 1.5 | 1.5 | 1.5 | 1.5 | 1.5 | 1.5 | 1.5 | 1.5 |
| vulcanization accelerator CZ *9) | 1.8 | 1.8 | 1.8 | 1.8 | 1.8 | 1.8 | 1.8 | 1.8 | 1.8 | 1.8 | 1.8 | 1.8 | 1.8 | 1.8 |
| sulfur *10) | 1.5 | 1.5 | 1.5 | 1.5 | 1.5 | 1.5 | 1.5 | 1.5 | 1.5 | 1.5 | 1.5 | 1.5 | 1.5 | 1.5 |
| Evaluation | | | | | | | | | | | | | | |
| 50°Ctanδ (Index) | 114 | 110 | 111 | 113 | 110 | 111 | 112 | 110 | 117 | 118 | 116 | 116 | 100 | 89 |

Commercial products shown in table 3 were used as respective components.
*1: BR01 (product of ENEOS Material); *2: ZEOSIL 1165MP (product of Solvay); *3: Si75 (product of Evonik); *4: Process oil T-DAE (product of ENEOS); *5: 500S (product of New Japan Chemical Co., Ltd.); *6: Zin Oxide II (product of Seido Chemical Industry Co., Ltd.); *7: Ozonone 6C (product of Seiko Chemical); *8: Nocceler D (Ouchi Shinko Chemical Industrial Co., Ltd.); *9: Nocceler CZ-G (Ouchi Shinko Chemical Industrial Co., Ltd.); *10) Golden Flower Sulfur Powder 200mesh (product of Tsurumi Chemical Industry Co., Ltd.)

As is clear from Table 3, the polymer compositions of Examples 1 to 12 exhibited considerable improvement in 50°C tanδ, as compared with the polymer compositions of Comparative Examples 1 and 2. Thus, modified conjugated diene-based polymers produced by use of a silicon-containing initiator were found to yield a cross-linked rubber having excellent rolling resistance (low fuel consumption performance). Among such cases, in Examples 9 to 12 employing an initiator solution obtained by mixing the compound [M] with the metal compound in advance, rolling resistance of a cross-linked product tended to be further improved. Also, through comparison of Example 1 with Example 2, use of such a compound further having the group F1 as a silicon-containing initiator tended to achieve further improvement in rolling resistance of a cross-linked product.

## Claims

1. A method for producing a modified conjugated diene-based polymer, the method comprising a step of polymerizing a monomer comprising a conjugated diene compound in the presence of a polymerization initiator,
wherein the polymerization initiator comprises a silicon-containing initiator having an alkali metal element or an alkaline earth metal element and a group F2, and
wherein the group F2 is a group "*¹-Si(R¹)ₙ(Y¹)₃₋ₙ":
wherein R¹ represents a C1 to C20 hydrocarbyl group; Y¹ represents group "-OR²" or group "-NR³R⁴"; each of R², R³, and R⁴ independently represents a C1 to C20 hydrocarbyl group; n is an integer of 0 to 2; when n is 0 or 1, a plurality of Y¹s are identical to or different from one another; when n is 2, a plurality of R⁴s are identical to or different from one another; and "*¹" represents a bond to a carbon atom.

2. The method for producing the modified conjugated diene-based polymer according to claim 1, wherein the silicon-containing initiator further has at least one group selected from the group consisting of a tertiary amino group and a protected secondary amino group.

3. The method for producing the modified conjugated diene-based polymer according to claim 1, wherein the silicon-containing initiator is a compound produced by mixing a metal compound which is at least one species selected from the group consisting of an alkali metal compound and an alkaline earth metal compound with a compound [M] having the group F2.

4. The method for producing the modified conjugated diene-based polymer according to claim 3, wherein the compound [M] has at least one member selected from the group consisting of a monovalent cyclic group having a structure in which a halogen atom or a methyl group is bound to an aromatic ring, a secondary amino group, and a haloalkyl group.

5. The method for producing the modified conjugated diene-based polymer according to claim 3, wherein the compound [M] is a compound represented by formula (1): 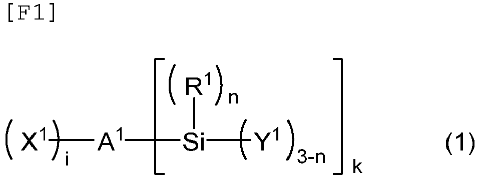
wherein X¹ represents a group represented by formula (2-1) or (2-2); A¹ represents a C1 to C20 (i+k)-valent hydrocarbon group or a C1 to C20 (i+k)-valent group which has at least one atom selected from the group consisting of a nitrogen atom, an oxygen atom, and a sulfur atom, and no active hydrogen and which bonds to each of group "-Si(R¹)ₙ(Y¹)₃₋ₙ" and the group represented by formula (2-2) via a carbon atom; R¹ represents a C1 to C20 hydrocarbyl group; Y¹ represents group "-OR²" or group "-NR³R⁴"; each of R², R³, and R⁴ independently represents a C1 to C20 hydrocarbyl group; n is an integer of 0 to 2; when n is 0 or 1, a plurality of groups "Y¹" are identical to or different from one another; when n is 2, a plurality of groups "R¹" are identical to or different from one another; each of i and k is independently an integer of 1 to 6, satisfying i+k≤10; when a plurality of groups "X¹" are present in formula (1), the plurality of groups "X¹" are identical to or different from one another; and when a plurality of groups "-Si(R¹)ₙ(Y¹)₃₋ₙ" are present, the plurality of groups "-Si(R¹)ₙ(Y¹)₃₋ₙ" are identical to or different from one another; 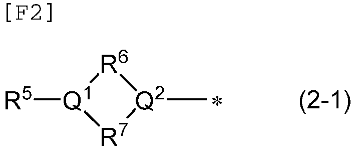 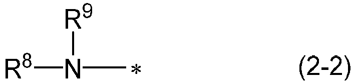
wherein, in formula (2-1), R⁵ represents a hydrogen atom, a C1 to C8 haloalkyl group, or a monovalent cyclic group having a structure in which a halogen atom or a methyl group is bound to an aromatic ring; each of R⁶ and R⁷ independently represents a C1 to C10 hydrocarbylene group; each of Q¹ and Q² independently represents a nitrogen atom or -CR¹⁰-; when R⁵ is a hydrogen atom, Q¹ is a nitrogen atom; R¹⁰ represents a hydrogen atom or a C1 to C20 hydrocarbyl group; and "*" represents a bond;
in formula (2-2), R⁸ represents a hydrogen atom, a C1 to C8 haloalkyl group, or a monovalent cyclic group having a structure in which a halogen atom or a methyl group is bound to an aromatic ring; R⁹ represents a C1 to C20 hydrocarbyl group or a trihydrocarbylsilyl group; when R⁸ is a hydrogen atom, R⁹ is a C1 to C20 hydrocarbyl group; and "*" represents a bond.

6. The method for producing the modified conjugated diene-based polymer according to claim 3, wherein the silicon-containing initiator which has been prepared by mixing the metal compound with the compound [M] in advance is mixed with the monomer.

7. The method for producing the modified conjugated diene-based polymer according to claim 3, wherein the silicon-containing initiator is formed by mixing the compound [M] with the metal compound in a reactor where the monomer is present.

8. The method for producing the modified conjugated diene-based polymer according to claim 7, wherein a vinyl content-modifying agent, which is a compound having at least one element of oxygen and nitrogen and not having any of active hydrogen, an alkali metal element, and an alkaline earth metal element, is added to the reactor after addition of the metal compound to the reactor.

9. The method for producing the modified conjugated diene-based polymer according to claim 1, which method further comprises a step of adding the silicon-containing initiator to the reactor after start of polymerization of the monomer.

10. A modified conjugated diene-based polymer represented by formula (3): 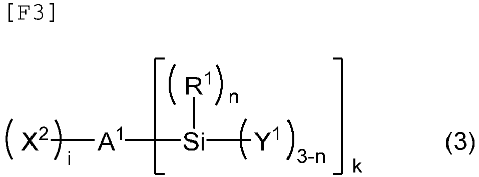
wherein X² represents a group represented by formula (4-1) or (4-2); A¹ represents a C1 to C20 (i+k)-valent hydrocarbon group or a C1 to C20 (i+k)-valent group which has at least one atom selected from the group consisting of a nitrogen atom, an oxygen atom, and a sulfur atom, and no active hydrogen and which bonds to each of group "-Si(R¹)ₙ(Y¹)₃₋ₙ" and the group represented by formula (4-2) via a carbon atom; R¹ represents a C1 to C20 hydrocarbyl group; Y¹ represents group "-OR²" or group "-NR³R⁴"; each of R², R³, and R⁴ independently represents a C1 to C20 hydrocarbyl group; n is an integer of 0 to 2; when n is 0 or 1, a plurality of groups "Y¹" are identical to or different from one another; when n is 2, a plurality of groups "R¹" are identical to or different from one another; each of i and k is independently an integer of 1 to 6, satisfying i+k≤10; when a plurality of groups "X²" are present in formula (3), the plurality of groups "X²" are identical to or different from one another; and when a plurality of groups "-Si(R¹)ₙ(Y¹)₃₋ₙ" are present, the plurality of groups "-Si(R¹)ₙ(Y¹)₃₋ₙ" are identical to or different from one another; 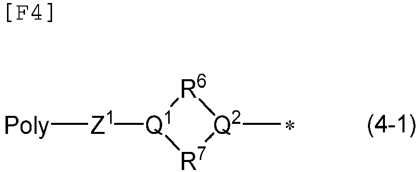 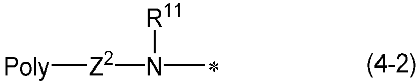
wherein, in formula (4-1), Z¹ represents a single bond, a C1 to C8 alkanediyl group, or group "*³-Ar¹-W¹-"; Ar¹ represents a divalent aromatic ring group; W¹ represents a single bond or a methylene group; "*³" represents a bond to Q¹; each of R⁶ and R⁷ independently represents a C1 to C10 hydrocarbylene group; each of Q¹ and Q² independently represents a nitrogen atom or -CR¹⁰-; when Z¹ is a single bond, Q¹ is a nitrogen atom; R¹⁰ represents a hydrogen atom or a C1 to C20 hydrocarbyl group; Poly represents a modified or unmodified conjugated diene-based polymer chain; and "*" represents a bond and;
in formula (4-2), Z² represents a single bond, a C1 to C8 alkanediyl group, or group "*⁴-Ar¹-W¹-"; Ar¹ represents a divalent aromatic ring group; W¹ represents a single bond or a methylene group; "*⁴" represents a bond to -NR¹¹-; R¹¹ represents a hydrogen atom, a C1 to C20 hydrocarbyl group, or a trihydrocarbylsilyl group; Poly represents a modified or unmodified conjugated diene-based polymer chain; and "*" represents a bond.

11. A polymer composition comprising the modified conjugated diene-based polymer produced through a production method as recited in any one of claims 1 to 9 or the modified conjugated diene-based polymer as recited in claim 10, and at least one species selected from the group consisting of silica and carbon black.

12. A cross-linked product formed by cross-linking of the polymer composition as recited in claim 11.

13. A tire having a tread and a sidewall, wherein one or both of them is formed by use of the polymer composition as recited in claim 11.
